# EUROPEAN PATENT SPECIFICATION

(11) **EP 3 585 569 B1**
(45) Date of publication and mention of the grant of the patent: **07.06.2023**
(21) Application number: 18709902.3
(22) Date of filing: 23.02.2018
(51) Int. Cl.: G05B 19/423, B25J 9/16

(54) **SYSTEMS, APPARATUS, AND METHODS FOR ROBOTIC LEARNING AND EXECUTION OF SKILLS**
SYSTEME, VORRICHTUNG UND VERFAHREN ZUM ROBOTISCHEN LERNEN UND AUSFÜHREN VON FÄHIGKEITEN
SYSTÈMES, APPAREIL ET PROCÉDÉS D'APPRENTISSAGE ROBOTIQUE ET D'EXÉCUTION DE COMPÉTENCES

(30) Priority: 25.02.2017 US 201762463628 P; 25.02.2017 US 201762463630 P
(43) Date of publication of application: 01.01.2020
(73) Proprietor: Diligent Robotics, Inc., Austin, Texas 78701 (US)
(72) Inventor: THOMAZ, Andrea Lockerd, Austin Texas 78703 (US); CHU, Vivian Yaw-Wen, Austin Texas 78702 (US)
(74) Representative: Cooley (UK) LLP
(86) International application number: PCT/US2018/019520
(87) International publication number: WO 2018/156952

(56) References cited:
- FR-A1- 2 898 824
- US-A1- 2003 120 391
- US-A1- 2013 245 824
- US-A1- 2016 257 000

## Description

### TECHNICAL FIELD

The present disclosure relates generally to systems, apparatus, and methods for robotic learning and execution of skills. More specifically, the present disclosure relates to a robotic apparatus capable of learning and executing skills in unstructured environments.

### BACKGROUND

Robots can be used to perform and automate a variety of tasks. Robots can perform tasks by moving through an environment, such as an office building or a hospital. Robots can be equipped with wheels, tracks, or other mobile components that enable them to move autonomously around an environment. Robots that do not have an arm or other manipulator, however, cannot manipulate objects in the environment. Therefore, these robots are limited in their ability to perform tasks, e.g., such robots may not be able to pick up and deliver an object without a human being present to manipulate the object at a pick up or delivery point.

Robots that include an arm or other manipulator may be able to pick up and deliver objects to a location without a human being present. For example, a robot that has an arm with an end effector, such as a gripper, can use the gripper to pick up one or more objects from different locations and deliver those objects to a new location, all without human assistance. These robots can be used to automate certain tasks, thereby allowing human operators to focus on other tasks. However, most commercial robots do not include manipulators due to the challenge and complexity of programming the operation of a manipulator.

Moreover, most commercial robots are designed to operate in structured environments, e.g., a factory, a warehouse, etc. Unstructured environments, e.g., environments involving humans, such as hospitals and homes, can impose additional challenges for programming a robot. In unstructured environments, robots cannot rely on complete knowledge of their surrounding environment but must be able to perceive changes in their surrounding environment and adapt based on those changes. Thus, in unstructured environments, robots have to continuously acquire information about the environment to be able to make autonomous decisions and perform tasks. Oftentimes, the movements of a robot, e.g., the movements of an arm or end effector in the environment, are also constrained by objects and other obstacles in the environment, further adding to the challenge of robot perception and manipulation. Given the uncertain and dynamic nature of unstructured environments, robots typically cannot be pre-programmed to perform tasks. Document US 2003/120391 discloses a teach-by-demonstration apparatus and method in which the robot is remotely taught to perform a desired task by an operator via a user interface.

Document US 2013/245824 discloses a robotic system in which the operator can teach a desired task to a robot by physically moving the robot manipulator through the workspace and recording data regarding the state of the robot and of the environment during the whole teaching phase.

Accordingly, there is a need for robotic systems that can perceive and adapt to dynamic and unstructured environments, and can perform tasks within those environments, without relying on pre-programmed manipulation skills.

### SUMMARY

Systems, apparatus, and methods are described for robotic learning and execution of skills. In accordance with one aspect of the invention, there is provided an apparatus claim as defined in claim 1. In accordance with a second aspect of the invention, there is provided a non-transitory processor-readable medium storing code representing instructions to be executed by a processor as defined in claim 10. Optional features are defined in the dependent claims.
In some examples, the set of physical objects can include a human.

In some examples, the plurality of markers are fiducial markers, and the representation of the environment is a visual representation of the environment.

In some examples, two or more markers from the plurality of markers can be associated with one physical object from the set of physical objects. Alternatively or additionally, in someexamples, one marker from the plurality of markers can be associated with two or more physical objects from the set of physical objects.

In someexamples, a method includes: obtaining, via a set of sensors, a representation of an environment; identifying a plurality of markers in the representation of the environment, each marker from the plurality of markers associated with a physical object from a plurality of physical objects located in the environment; presenting information indicating a position of each marker from the plurality of markers in the representation of the environment; receiving, after the presenting, a selection of a set of markers from the plurality of markers associated with a set of physical objects from the plurality of physical objects; obtaining, for each position from a plurality of positions associated with a motion of a manipulating element in the environment, sensory information associated with the manipulating element, where the motion of the manipulating element is associated with a physical interaction between the manipulating element and the set of physical objects; and generating, based on the sensory information, a model configured to define movements of the manipulating element to execute the physical interaction between the manipulating element and the set of physical objects.

In someexamples, the method further includes receiving a selection of a first subset of features from the set of features, where the model is generated based on sensor data associated with the first subset of features and not based on sensor data associated with a second subset of features from the set of features not included in the first set of features.

In someexamples, a method includes: obtaining, via a set of sensors, a representation of an environment; identifying a plurality of markers in the representation of the environment, each marker from the plurality of markers associated with a physical object from a plurality of physical objects located in the environment; presenting information indicating a position of each marker from the plurality of markers in the representation of the environment; in response to receiving a selection of a set of markers from the plurality of markers associated with a set of physical objects from the plurality of physical objects, identifying a model associated with executing a physical interaction between a manipulating element and the set of physical objects, the manipulating element including a plurality of joints and an end effector; and generating, using the model, a trajectory for the manipulating element that defines movements of the plurality of joints and the end effector associated with executing the physical interaction.

In someexamples, the method further includes: displaying to a user the trajectory for the manipulating element in the representation of the environment; receiving, after the displaying, an input from the user; and in response to the input indicating an acceptance of the trajectory for the manipulating element, implementing the movements of the plurality of joints and the end effector to execute the physical interaction.

In someexamples, the model is associated with (i) a stored set of markers, (ii) sensory information indicating at least one of a position or an orientation of the manipulating element at points along a stored trajectory of the manipulating element associated with the stored set of markers, and (iii) sensory information indicating a configuration of the plurality of joints at the points along the stored trajectory. The method of generating the trajectory for the manipulating element including: computing a transformation function between the set of markers and the stored set of markers; transforming, for each point, the at least one of the position or the orientation of the manipulating element using the transformation function; determining, for each point, a planned configuration of the plurality of joints based on the configuration of the plurality of joints at the points along the stored trajectory; and determining, for each point, a portion of the trajectory between that point and a consecutive point based on the planned configuration of the plurality of joints for that point.

### BRIEF DESCRIPTION OF THE DRAWINGS

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally similar and/or structurally similar elements).
FIG. 1 is a block diagram illustrating a configuration of system including a robotic device, according to some embodiments.
FIG. 2 is a block diagram illustrating a configuration of a robotic device, according to some embodiments.
FIG. 3 is a block diagram illustrating a configuration of a control unit associated with a robotic device, according to some embodiments.
FIG. 4 is a schematic illustration of a manipulating element of a robotic device, according to some embodiments.
FIG. 5 is a schematic illustration of a robotic device, according to some embodiments.
FIGS. 6A and 6B are schematic illustrations of objects in an environment viewed by a robotic device, according to some embodiments.
FIGS. 7A and 7B are schematic illustrations of objects in an environment viewed by a robotic device, according to some embodiments.
FIG. 8 is a flow diagram illustrating a method of scanning an environment performed by a robotic device, according to some embodiments.
FIG. 9 is a flow diagram illustrating a method of learning and execution of skills performed by a robotic device, according to some embodiments.
FIG. 10 is a flow diagram illustrating a method of learning a skill performed by a robotic device, according to some embodiments.
FIG. 11 is a flow diagram illustrating a method of executing a skill performed by a robotic device, according to some embodiments.
FIG. 12 is a block diagram showing a system architecture for robotic learning and execution, including user actions, according to some embodiments.

### DETAILED DESCRIPTION

Systems, apparatus, and methods are described herein for robotic learning and execution of skills. In some embodiments, systems, apparatus, and methods described herein relate to a robotic apparatus capable of learning skills via human demonstrations and interactions and executing learned skills in unstructured environments.

In some embodiments, systems, apparatus, and methods described herein relate to robots that can learn skills (e.g., manipulation skills) via a Learning from Demonstration ("LfD") process, in which a human demonstrates an action to the system via kinesthetic teaching (e.g. the human guides the robot through the action physically and/or by remote control) and/or the human's own performance of the action. Such systems, apparatus, and methods do not require a robot to be pre-programmed with manipulation skills, but rather the robot is designed to be adaptive and capable of learning skills via observations. For example, a robot can use machine-learning techniques to acquire and execute a manipulation skill. After learning a skill, the robot can execute the skill in different environments. The robot can learn and/or execute a skill based on visual data (e.g., perceived visual information). Alternatively or additionally, the robot can learn and/or execute the skill using haptic data (e.g., torque, forces, and other non-visual information). Robotic learning can take place at a factory prior to robot deployment, or onsite (e.g., at a hospital) after robot deployment. In some embodiments, a robot can be taught a skill and/or adapted to operate in an environment by users who are not trained in robotics and/or programming. For example, the robot can have a learning algorithm that leverages natural human behavior, and can include tools that can guide a user through the demonstration process.

In some embodiments, a robot can be designed to interact with humans and collaborate with humans to perform tasks. In some embodiments, a robot can use common social behavior to act in a socially predictable and acceptable manner around humans. Robots that are mobile can also be designed to navigate within an environment while interacting with humans in that environment. For example, a robot can be programmed to voice certain phrases to navigate around humans, to move aside to allow humans to pass, and to use eye gaze to communicate intentionality during navigation. In some embodiments, a robot can have sensors that enable it to perceive and track humans in the environment around it, and to use that information to trigger eye gaze and other social behaviors.

In some embodiments, a robot can be designed to propose options for achieving a goal or performing an action during a LID process. For example, a robot can propose a few different options for achieving a goal (e.g., picking up an object), and can indicate which of those options is most likely to be effective and/or efficient at achieving the goal. In some embodiments, a robot can adapt a skill based on inputs by a user, e.g., a user indicating relevant features to include in a skill model.

In some embodiments, a robotic device can be capable of learning and/or executing skills in an unstructured environment, e.g., a dynamic and/or human environment, where the robotic device does not have complete information of the environment beforehand. Unstructured environments can include, for example, indoor and outdoor settings, and can include one or more humans or other objects that are movable within the environment. Since most natural or real-world environments are unstructured, robotic devices that can adapt and operate in an unstructured environment, such as robotic devices and/or systems described herein, can offer significant improvements over existing robotic devices that are incapable of adapting to an unstructured environment. Unstructured environments can include indoor settings (e.g., buildings, offices, houses, rooms, etc.) and/or other types of enclosed spaces (e.g., airplanes, trains, and/or other types of movable compartments), as well as outdoor settings (e.g., parks, beaches, outside yards, fields). In an embodiment, robotic devices described herein can operate in an unstructured hospital environment.

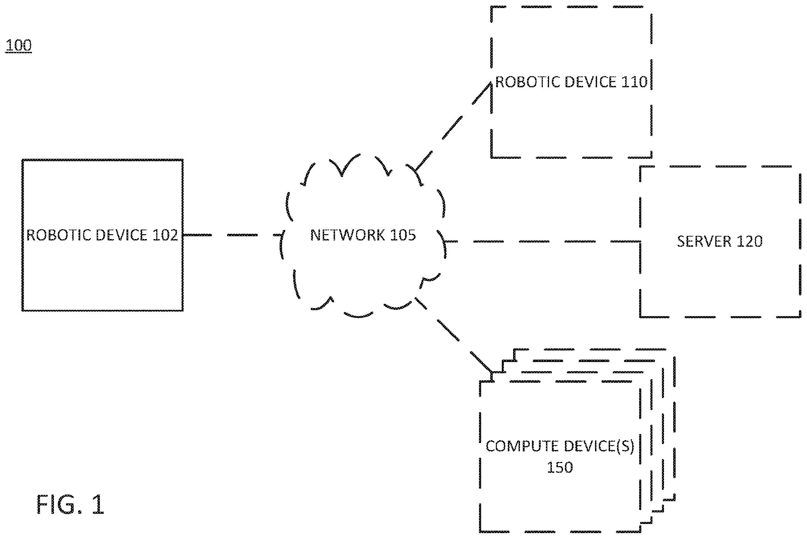

FIG. 1 is a high-level block diagram that illustrates a system 100, according to some embodiments. System 100 can be configured to learn and execute skills, such as, for example, manipulation skills in an unstructured environment. System 100 can be implemented as a single device, or be implemented across multiple devices that are connected to a network 105. For example, as depicted in FIG. 1, system 100 can include one or more compute devices, such as, for example, one or more robotic devices 102 and 110, a server 120, and additional compute device(s) 150. While four devices are shown, it should be understood that system 100 can include any number of compute devices, including compute devices not specifically shown in FIG. 1.

Network 105 can be any type of network (e.g., a local area network (LAN), a wide area network (WAN), a virtual network, a telecommunications network) implemented as a wired network and/or wireless network and used to operatively couple compute devices, including robotic devices 102 and 110, server 120, and compute device(s) 150. As described in further detail herein, in some embodiments, for example, the compute devices are computers connected to each other via an Internet Service Provider (ISP) and the Internet (e.g., network 105). In some embodiments, a connection can be defined, via network 105, between any two compute devices. As shown in FIG. 1, for example, a connection can be defined between robotic device 102 and any one of robotic device 110, server 120, or additional compute device(s) 150. In some embodiments, the compute devices can communicate with each other (e.g., send data to and/or receive data from) and with the network 105 via intermediate networks and/or alternate networks (not shown in FIG. 1). Such intermediate networks and/or alternate networks can be of a same type and/or a different type of network as network 105. Each compute device can be any type of device configured to send data over the network 105 to send and/or receive data from one or more of the other compute devices.

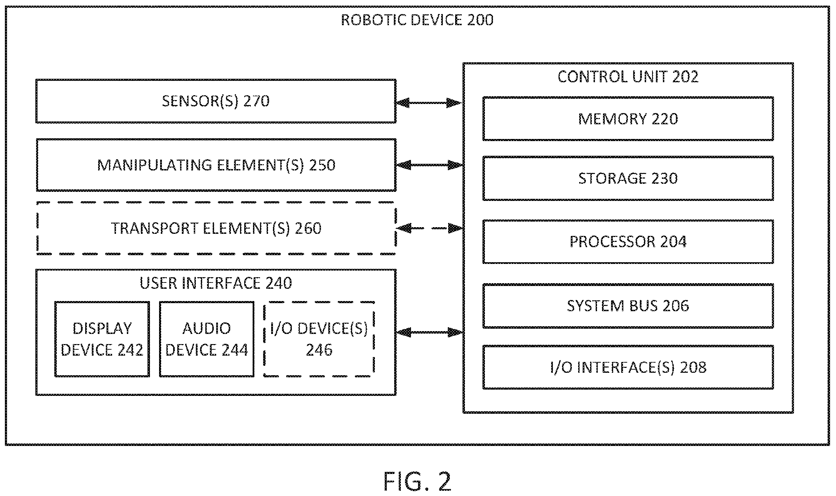

In some embodiments, system 100 includes a single robotic device, e.g., robotic device 102. Robotic device 102 can be configured to perceive information about an environment, learn skills via human demonstration and interactions, and/or execute those skills in the environment. A more detailed view of an example robotic device is depicted in FIG. 2.

In other embodiments, system 100 includes multiple robotic devices, e.g., robotic devices 102 and 110. Robotic device 102 can send and/or receive data to and/or from robotic device 110 via network 105. For example, robotic device 102 can send information that it perceives about an environment (e.g., a location of an object) to robotic device 110, and can receive information about the environment from robotic device 110. Robotic devices 102 and 110 can also send and/or receive information to and/or from one another to learn and/or execute a skill. For example, robotic device 102 can learn a skill in an environment and send a model representing that learned skill to robotic device 110, and robotic device 110, upon receiving that model, can use it to execute the skill in the same or a different environment. Robotic device 102 can be in a location that is the same as or different from robotic device 110. For example, robotic devices 102 and 110 can be located in the same room of a building (e.g., a hospital building) such that they can learn and/or execute a skill together (e.g., moving a heavy or large object). Alternatively, robotic device 102 can be located on a first floor of a building (e.g., a hospital building), and robotic device 110 can be located on a second floor of a building, and the two can communicate with one another to relay information about the different floors to one another (e.g., where objects are located on those floors, where a resource may be, etc.).

In some embodiments, system 100 includes one or more robotic devices, e.g., robotic device 102 and/or 110, and a server 120. Server 120 can be a dedicated server that manages robotic device 102 and/or 110. Server 120 can be in a location that is the same as or different from robotic device 102 and/or 110. For example, server 120 can be located in the same building as one or more robotic devices (e.g., a hospital building), and be managed by a local administrator (e.g., a hospital administrator). Alternatively, server 120 can be located at a remote location (e.g., a location associated with a manufacturer or provider of the robotic device).

In some embodiments, system 100 includes one or more robotic devices, e.g., robotic device 102 and/or 110, and an additional compute device 150. Compute device 150 can be any suitable processing device configured to run and/or execute certain functions. In a hospital setting, for example, a compute device 150 can be a diagnostic and/or treatment device that is capable of connecting to network 105 and communicating with other compute devices, including robotic device 102 and/or 110.

FIG. 2 schematically illustrates a robotic device 200, according to some embodiments. Robotic device 200 includes a control unit 202, a user interface 240, at least one manipulating element 250, and at least one sensor 270. Additionally, in some embodiments, robotic device 200 optionally includes at least one transport element 260. Control unit 202 includes a memory 220, a storage 230, a processor 204, a system bus 206, and at least one input/output interface ("I/O interface") 208. Memory 220 can be, for example, a random access memory (RAM), a memory buffer, a hard drive, a database, an erasable programmable read-only memory (EPROM), an electrically erasable read-only memory (EEPROM), a read-only memory (ROM), and/or so forth. In some embodiments, memory 220 stores instructions that cause processor 204 to execute modules, processes, and/or functions associated with scanning or viewing an environment, learning a skill, and/or executing a skill. Storage 230 can be, for example, a hard drive, a database, a cloud storage, a network-attached storage device, or other data storage device. In some embodiments, storage 230 can store, for example, sensor data including state information regarding one or more components of robotic device 200 (e.g., manipulating element 250), learned models, marker location information, etc.

Processor 204 of control unit 202 can be any suitable processing device configured to run and/or execute functions associated with viewing an environment, learning a skill, and/or executing a skill. For example, processor 204 can be configured to generate a model for a skill based on sensor information, or execute a skill by generating, using a model, a trajectory for performing a skill, as further described herein. More specifically, processor 204 can be configured to execute modules, functions, and/or processes. In some embodiments, processor 204 can be a general purpose processor, a Field Programmable Gate Array (FPGA), an Application Specific Integrated Circuit (ASIC), a Digital Signal Processor (DSP), and/or the like.

System bus 206 can be any suitable component that enables processor 204, memory 220, storage 230, and/or other components of control unit 202 to communicate with each other. I/O interface(s) 208, connected to system bus 206, can be any suitable component that enables communication between internal components of control unit 202 (e.g., processor 204, memory 220, storage 230) and external input/output devices, such as user interface 240, manipulating element(s) 250, transport element(s) 260, and sensor(s) 270).

User interface 240 can include one or more components that are configured to receive inputs and send outputs to other devices and/or a user operating a device, e.g., a user operating robotic device 200. For example, user interface 240 can include a display device 242 (e.g., a display, a touch screen, etc.), an audio device 244 (e.g., a microphone, a speaker), and optionally one or more additional input/output device(s) ("I/O device(s)") 246 configured for receiving an input and/or generating an output to a user.

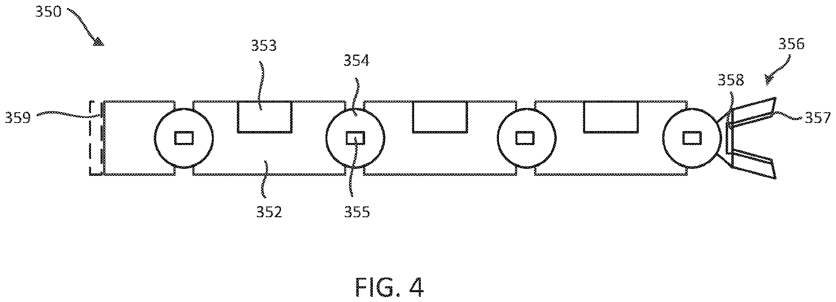

Manipulating element(s) 250 can be any suitable component that is capable of manipulating and/or interacting with a stationary and/or moving object, including, for example, a human. Manipulating element(s) 250 can include a plurality of segments that are coupled to one another via joints that can provide for translation along and/or rotation about one or more axes. Manipulating element(s) 250 can also include an end effector that can engage with and/or otherwise interact with objects in an environment. For example, manipulating element can include a gripping mechanism that can releasably engage (e.g., grip) objects in the environment to pick up and/or transport the objects. Other examples of end effectors include, for example, vacuum engaging mechanism(s), magnetic engaging mechanism(s), suction mechanism(s), and/or combinations thereof. A detailed view of an example manipulating element is depicted in FIG. 4.

Transport element(s) 260 can be any suitable components configured for movement such as, for example, a wheel or a track. One or more transport element(s) 260 can be provided on a base portion of robotic device 200 to enable robotic device 200 to move around an environment. For example, robotic device 200 can include a plurality of wheels that enable it to navigate around a building, such as, for example, a hospital. Transport element(s) 260 can be designed and/or dimensioned to facilitate movement through tight and/or constrained spaces (e.g., small hallways and corridors, small rooms such as supply closets, etc.).

Sensor(s) 270 can be any suitable component that enables robotic device 200 to capture information about the environment and/or objects in the environment around robotic device 200. Sensor(s) 270 can include, for example, image capture devices (e.g., cameras, such as a red-green-blue-depth (RGB-D) camera or a webcam), audio devices (e.g., microphones), light sensors (e.g., light detection and ranging or lidar sensors, color detection sensors), proprioceptive sensors, position sensors, tactile sensors, force or torque sensors, temperature sensors, pressure sensors, motion sensors, sound detectors, etc. For example, sensor(s) 270 can include at least one image capture device such as a camera for capturing visual information about objects and the environment around robotic device 200. In some embodiments, sensor(s) 270 can include haptic sensors, e.g., sensors that can convey forces, vibrations, touch, and other non-visual information to robotic device 200.

In some embodiments, robotic device 200 can be have humanoid features, e.g., a head, a body, arms, legs, and/or a base. For example, robotic device 200 can include a face with eyes, a nose, a mouth, and other humanoid features. While not schematically depicted, robotic device 200 can also include actuators, motors, couplers, connectors, power sources (e.g., an onboard battery), and/or other components that link, actuate, and/or drive different portions of robotic device 200.

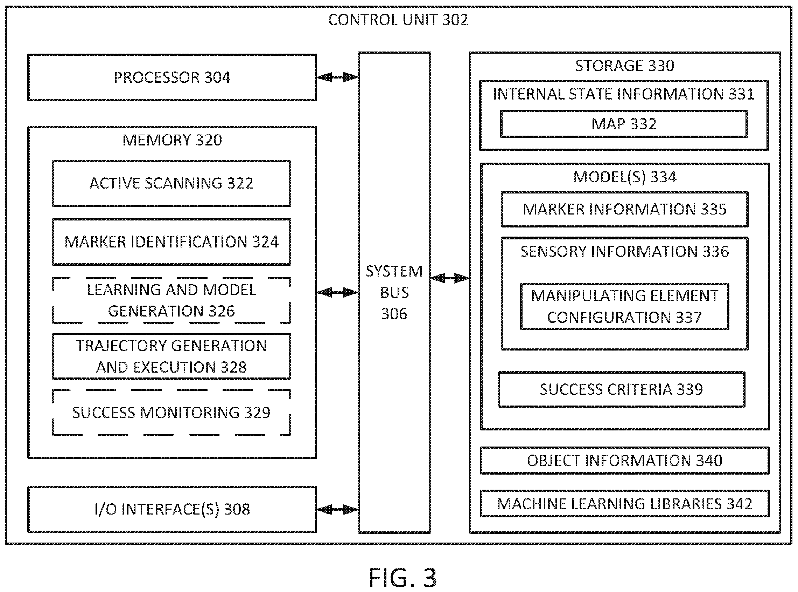

FIG. 3 is a block diagram that schematically illustrates a control unit 302, according to some embodiments. Control unit 302 can include similar components as control unit 202, and can be structurally and/or functionally similar to control unit 202. For example, control unit 302 includes a processor 304, a memory 320, I/O interface(s) 308, a system bus 306, and a storage 330, which can be structurally and/or functionally similar to processor 204, memory 220, I/O interface(s) 208, system bus 206, and storage 230, respectively.

Memory 320 stores instructions that can cause processor 304 to execute modules, processes, and/or functions, illustrated as active scanning 322, marker identification 324, learning and model generation 326, trajectory generation and execution 328, and success monitoring 329. Active scanning 322, marker identification 324, learning and model generation 326, trajectory generation and execution 328, and success monitoring 329 can be implemented as one or more programs and/or applications that are tied to hardware components (e.g., a sensor, a manipulating element, an I/O device, a processor, etc.). Active scanning 322, marker identification 324, learning and model generation 326, trajectory generation and execution 328, and success monitoring 329 can be implemented by one robotic device or multiple robotic devices. For example, a robotic device can be configured to implement active scanning 322, marker identification 324, and trajectory generation and execution 328. As another example, a robotic device can be configured to implement active scanning 322, marker identification 324, optionally learning and model generation 326, and trajectory generation and execution 328. As another example, a robotic device can be configured to implement active scanning 322, marker identification 324, trajectory generation and execution 328, and optionally success monitoring 329. While not depicted, memory 320 can also store programs and/or applications associated with an operating system, and general robotic operations (e.g., power management, memory allocation, etc.).

Storage 330 stores information relating to skill learning and/or execution. Storage 330 stores, for example, internal state information 331, model(s) 334, object information 340, and machine learning libraries 342. Internal state information 331 can include information regarding a state of a robotic device (e.g., robotic device 200) and/or an environment in which the robotic device is operating (e.g., a building, such as, for example, a hospital). In some embodiments, state information 331 can indicate a location of the robotic device within the environment, such as, for example, a room, a floor, an enclosed space, etc. For example, state information 331 can include a map 332 of the environment, and indicate a location of the robotic device within that map 332. State information 331 can also include the location(s) of one or more objects (or markers representing and/or associated with objects) within the environment, e.g., within map 332. Thus, state information 331 can identify a location of a robotic device relative to one or more objects. Objects can include any type of physical object that is located within the environment. Objects can be stationary or mobile. Examples of objects in an environment, such as, for example, a hospital, include equipment, supplies, instruments, tools, furniture, and/or humans (e.g., nurses, doctors, patients, etc.).

Object information 340 can include information relating to physical object(s) in an environment. For example, object information can include information identifying or quantifying different features of an object, such as, for example, location, color, shape, and surface features. Object information can also identify codes, symbols, and other markers that are associated with a physical object, e.g., Quick Response or "QR" codes, barcodes, tags, etc. Object information can enable control unit 302 to identify physical object(s) in the environment.

Machine learning libraries 342 can include modules, processes, and/or functions relating to different algorithms for machine learning and/or model generation of different skills. In some embodiments, machine learning libraries can include methods such as Hidden Markov Models or "HMMs." An example of an existing machine learning library in Python is scikit-leam. Storage 330 can also include additional software libraries relating to, for example, robotics simulation, motion planning and control, kinematics teaching and perception, etc.

Model(s) 334 are models that have been generated for performing different actions, and represent skills that have been learned by a robotic device. In some embodiments, each model 334 is associated with a set of markers that are tied to different physical objects in an environment. Marker information 335 can indicate which markers are associated with a particular model 334. Each model 334 can also be associated with sensory information 336 that is collected, e.g., via one or more sensors of a robotic device, during kinesthetic teaching and/or other demonstrations of a skill. Sensory information 336 can include manipulating element information 337 associated with a manipulating element of a robotic device as it performs an action during a demonstration. Manipulating element information 337 can include, for example, joint configurations, end effector positions and configurations, and/or forces and torques acting on joints and/or end effectors. Manipulating element information 337 can be recorded at specific points during a demonstration and/or execution of a skill (e.g., keyframes), or alternatively, throughout a demonstration and/or execution of a skill. Sensory information 336 can also include information associated with an environment in which a skill is demonstrated and/or executed, e.g., location of markers in the environment. In some embodiments, each model 334 can be associated with success criteria 339. Success criteria 339 can be used to monitor the execution of a skill. In some embodiments, success criteria 339 can include information associated with visual and haptic data that are perceived using one or more sensors, e.g., cameras, force/torque sensors, etc. Success criteria 339 can be, for example, tied to visually detecting movement of an object, sensing a force that is acting on a component of the robotic device (e.g., a weight from an object), sensing an engagement between a component of the robotic device and an object (e.g., a change in pressure or force acting on a surface), etc. Examples of using haptic data in robotic learning of manipulation skills is described in the article entitled "Learning Haptic Affordances from Demonstration and Human-Guided Exploration," authored by Chu et. al., published in 2016 IEEE Haptics Symposium (HAPTICS), Philadelphia, PA, 2016, pp. 119-125, accessible at http://ieeexplore.ieee.org/document/7463165/. Examples of using visual data in robotic learning of manipulating skills is described in the article entitled "Simultaneously Learning Actions and Goals from Demonstration," authored by Akgun et al., published in Autonomous Robots, Volume 40, Issue 2, February 2016, pp. 211-227, accessible at https://doi.org/10.1007/s10514-015-9448-x ("Akgun article").

FIG. 4 schematically illustrates a manipulating element 350, according to some embodiments. Manipulating element 350 can form a part of a robotic device, such as, for example, robotic device 102 and/or 200. Manipulating element 350 can be implemented as an arm that includes two or more segments 352 coupled together via joints 354. Joints 354 can allow one or more degrees of freedom. For example, joints 354 can provide for translation along and/or rotation about one or more axes. In an embodiment, manipulating element 350 can have seven degrees of freedom provided by joints 354. While four segments 352 and four joints 354 are depicted in FIG. 4, one of ordinary skill in the art would understand that a manipulating element can include a different number of segments and/or joints.

Manipulating element 350 includes an end effector 356 that can be used to interact with objects in an environment. For example, end effector 356 can be used to engage with and/or manipulate different objects. Alternatively or additionally, end effector 356 can be used to interact with movable or dynamic objects, including, for example, humans. In some embodiments, end effector 356 can be a gripper that can releasably engage or grip one or more objects. For example, end effector 356 implemented as a gripper can pick up and move an object from a first location (e.g., a supply closet) to a second location (e.g., an office, a room, etc.).

A plurality of sensors 353, 355, 357, and 358 can be disposed on different components of manipulating element 350, e.g., segments 352, joints 354, and/or end effector 356. Sensors 353, 355, 357, and 358 can be configured to measure sensory information, including environmental information and/or manipulating element information. Examples of sensors include position encoders, torque and/or force sensors, touch and/or tactile sensors, image capture devices such as cameras, temperature sensors, pressure sensors, light sensors, etc. In some embodiments, sensor 353 disposed on a segment 352 can be a camera that is configured to capture visual information about an environment. In some embodiments, sensor 353 disposed on a segment 352 can be an accelerometer configured to enable measurement of an acceleration, and/or calculation of speed of movement, and/or a position, of segment 352. In some embodiments, sensor 355 disposed on a joint 354 can be a position encoder configured to measure a position and/or configuration of joint 354. In some embodiments, sensor 355 disposed on a joint 354 can be a force or torque sensor configured to measure a force or torque applied to joint 354. In some embodiments, sensor 358 disposed on end effector 356 can be a position encoder and/or a force or torque sensor. In some embodiments, sensor 357 disposed on end effector 356 can be a touch or tactile sensor configured to measure an engagement between end effector 356 and an object in the environment. Alternatively or additionally, one or more of sensors 353, 355, 357, and 358 can be configured to record information about one or more objects and/or markers in the environment. For example, sensor 358 disposed on end effector 356 can be configured to track a location of an object in the environment and/or a position of the object relative to end effector 356. In some embodiments, one or more of sensors 353, 355, 357, and 358 can also track whether an object, such as a human, has moved in the environment. Sensors 353, 355, 357, and 358 can send the sensory information that they record to a compute device located on a robotic device (e.g., an onboard control unit such as, for example, control unit 202 and/or 302), or sensors 353, 355, 357, and 358 can send the sensory information to a remote compute device (e.g., a server such as, for example, server 120).

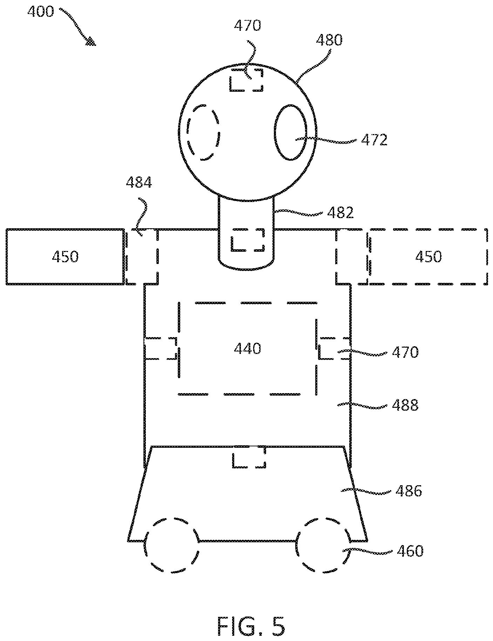

Manipulating element 350 can optionally include a coupling element 359 that enables manipulating element 350 to be releasably coupled to a robotic device, such as any of the robotic devices described herein. In some embodiments, manipulating element 350 can be coupled to a fixed location of the robotic device and/or be capable of being coupled to multiple locations of the robotic device (e.g., a right side or a left side of a body of robotic device, as shown in FIG. 5). Coupling element 359 can include any type of mechanism that can couple manipulating element 350 to the robotic device, such as, for example, a mechanical mechanism (e.g., a fastener, a latch, a mount), a magnetic mechanism, a friction fit, etc.

FIG. 5 schematically illustrates a robotic device 400, according to some embodiments. Robotic device 400 includes a head 480, a body 488, and a base 486. Head 480 can be connected to body 488 via a segment 482 and one or more joints (not depicted). Segment 482 can be movable and/or flexible to enable head 480 to move relative to body 488.

Head 480 includes one or more image capture devices 472 and/or other sensors 470. Image capture device 472 and/or other sensors 470 (e.g., lidar sensors, motion sensors, etc.) can enable robotic device 400 to scan an environment and obtain a representation (e.g., a visual representation or other semantic representation) of the environment. In some embodiments, image capture device 472 can be a camera. In some embodiments, image capture device 472 can be movable such that it can be used to focus on different areas of the environment around robotic device 400. Image capture device 472 and/or other sensors 4 70 can collect and send sensory information to a compute device or processor onboard robotic device 400, such as, for example, control unit 202 or 302. In some embodiments, head 480 of robotic device 400 can have a humanoid shape, and include one or more human features, e.g., eyes, nose, mouth, ears, etc. In such embodiments, image capture device 472 and/or other sensors 470 can be implemented as one or more human features. For example, image capture device 472 can be implemented as eyes on head 480.

In some embodiments, robotic device 400 can use image capture device 472 and/or other sensors 470 to scan an environment for information about objects in the environment, e.g., physical structures, devices, articles, humans, etc. Robotic device 400 can engage in active scanning, or robotic device 400 can initiate scanning in response to a trigger (e.g., an input from a user, a detected event or change in the environment).

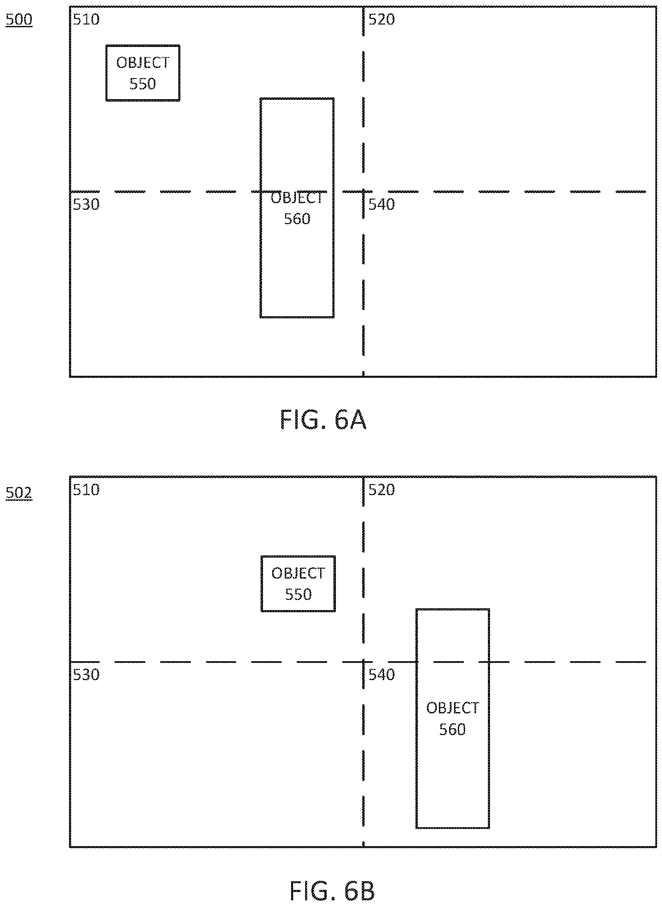

In some embodiments, robotic device 400 can engage in adaptive scanning where scanning can be performed based on stored knowledge and/or a user input. For example, robotic device 400 can identify an area in the environment to scan for an object based on prior information that is has on the object. Referring to FIG. 6A, robotic device 400 can scan a scene (e.g., an area of a room) and obtain a representation 500 of the scene. In representation 500, robotic device 400 identifies that a first object 550 is located in an area 510 and that a second object 560 is located in areas 510 and 530. Robotic device 400 can store the locations of objects 550 and 560 in a map of the environment that it stored internally, such that robotic device 400 can use that information to locate objects 550 and 560 when performing a future scan. For example, when robotic device 400 returns to the scene and scans the scene a second time, robotic device 400 may obtain a different view of the scene, as shown in FIG. 6B. When performing this second scan, robotic device 400 can obtain a representation 502 of the scene. To locate objects 550 and 560 in representation 502, robotic device 400 can refer to information that it had previously stored about the locations of those objects when it had obtained representation 500 of the scene. Robotic device 400 can take into account that its own location in the environment may have changed, and recognize that objects 550 and 560 may be located in different areas of representation 502. Based on this information, robotic device 400 may know to look in area 510 for object 550 but to look in areas 520 and 540 for object 560. Robotic device 400, by using previously stored information about the locations of objects 550 and 560, can automatically identify areas to scan closely (e.g., by zooming in, by slowly moving a camera through those areas) for objects 550 and 560.

In some embodiments, robotic device 400 can also know to scan different areas of a scene more closely based on an input by a human. For example, a human can indicate to robotic device 400 that a certain area of a scene includes one or more objects of interest, and robotic device 400 can scan those areas more closely to identify those objects. In such embodiments, robotic device 400 can include an input/output device 440, such as a display with a keyboard or other input device, and/or a touchscreen, as schematically depicted in FIG. 5.

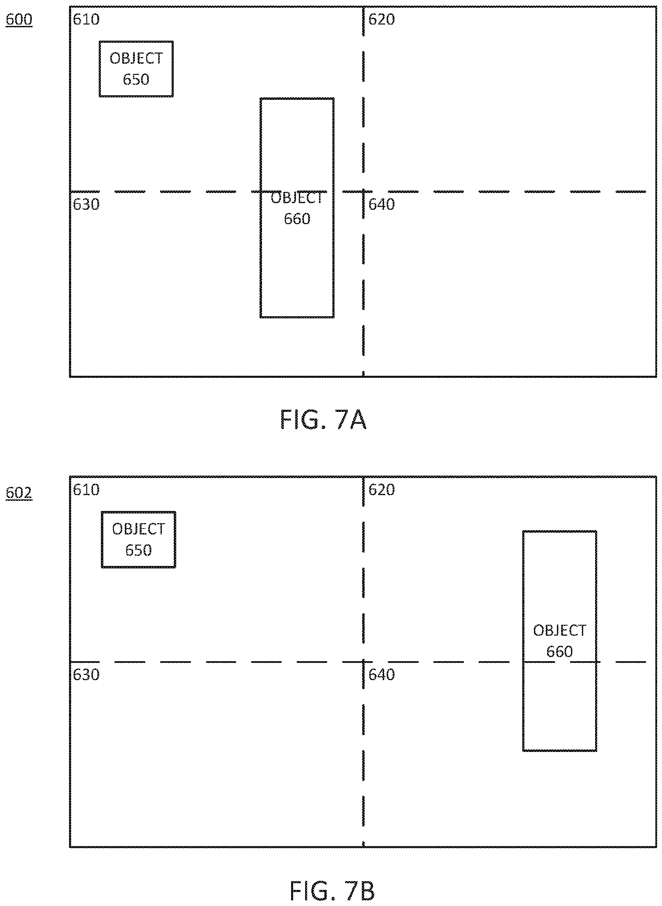

In some embodiments, robotic device 400 can scan an environment and identify that an object, such as, for example, a human, is moving in the environment. For example, as shown in FIGS. 7A and 7B, an object 660 can be moving in an environment while an object 650 remains stationary. FIG. 7A depicts a representation 600 of a scene, showing object 660 in areas 610 and 630, and FIG. 7B depicts representation 602 of the scene, showing object 660 in areas 620 and 640. In both representations 600 and 602, object 650 can remain in the same location in area 610. Robotic device 400 can identify that object 660 has moved in the scene and adjust its actions accordingly. For example, if robotic device 400 had plans to interact with object 660, robotic device 400 may change its trajectory, e.g., move closer to object 660 and/or change a trajectory of a manipulating element or other component that is configured to interact with object 660. Alternatively or additionally, if robotic device 400 had plans to interact with object 650 (and/or another object in the scene), robotic device 400 can take into account the movement of object 660 while planning its course for interacting with object 650. In some embodiments, robotic device 400 can engage in active scanning such that it can adjust its actions in near real-time.

As schematically depicted in FIG. 5, base 486 optionally can include one or more transport elements implemented as wheels 460. Wheels 460 can enable robotic device 400 to move around an environment, e.g., a hospital. Robotic device 400 also includes at least one manipulating element 450. Manipulating element 450 can be structurally and/or functionally similar to other manipulating elements described herein, e.g., manipulating element 350. Manipulating element 450 can be fixedly attached to body 488 of robotic device 400, or optionally, manipulating element 450 can be releasably coupled to body 488 via a coupling element (e.g. coupling element 359) that can attach to a coupling portion 484 of robotic device 400. Coupling portion 484 can be configured to engage with coupling element 359, and provide an electrical connection between manipulating element 450 and an onboard compute device (e.g., control unit 202 or 302), such that the onboard compute device can power and/or control components of manipulating element 450, and receive information collected by sensors disposed on manipulating element 450 (e.g., sensors 353, 355, 357, and 358).

Optionally, robotic device 400 can also include one or more additional sensor(s) 470 located on segment 482, body 488, base 486, and/or other parts of robotic device 400. Sensor(s) 470 can be, for example, image capture devices, force or torque sensors, motion sensors, light sensors, pressure sensors, and/or temperature sensors. Sensors 470 can enable robotic device 400 to capture visual and non-visual information about the environment.

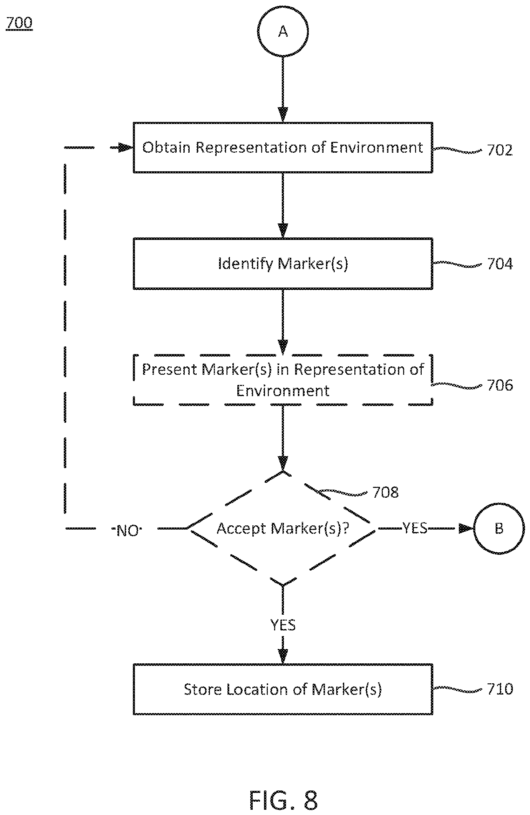

FIGS. 8-11 are flow diagrams illustrating a method 700 that can be performed by a robotic system (e.g., robotic system 100) including one or more robotic devices, according to some embodiments. For example, all or a part of method 700 can be performed by one robotic device, such as any of the robotic devices described herein. Alternatively, all of method 700 can be performed sequentially by multiple robotic devices, each performing, in turn, a part of method 700. Alternatively, all or a part method 700 can be performed concurrently by multiple robotic devices.

As depicted in FIG. 8, a robotic device can scan an environment and obtain a representation of the environment, at 702. The robotic device can scan the environment using one or more sensors (e.g., sensor(s) 270 or 470, and/or image capture device(s) 472). In some embodiments, the robotic device can scan the environment using a movable camera, where the position and/or focus of the camera can be adjusted to capture areas in a scene of the environment. At 704, based on the information collected during the scanning, the robotic device can analyze the data to identify marker(s) in the captured representation of the environment. The markers can be associated with one or more objects in the scene that have been marked using visual or fiducial markers, e.g., a visible marker such as a QR code, a barcode, a tag, etc. Alternatively or additionally, the robotic device can identify markers associated with one or more objects in the environment via object recognition using object information (e.g., object information 340) that is stored in a memory on the robotic device (e.g., storage 330). Object information can include, for example, information indicating different features of an object, such as location, color, shape, and surface features. In an embodiment, object information can be organized as numerical values that represent different features of an object, which can be referred to as a feature space.

After identifying the marker(s), the robotic device can optionally present the marker(s) in a representation of the environment, at 706. In some embodiments, the representation of the environment can be a visual representation such as, for example, an augmented view of the environment. In such embodiments, the robotic device can display the visual representation of the environment, e.g., on a display screen, and display the locations of the marker(s) in the visual representation of the environment. Alternatively or additionally, the representation of the environment can be a semantic representation of the environment, with the locations of the marker(s), represented by semantic markers, in the environment.

The robotic device can present the representation of the environment with the marker(s) to a user, and prompt the user, e.g., via a user interface or other type of I/O device, to accept or reject the marker(s) in the representation of the environment, at 708. If the user does not accept the marker(s) (708: NO), then method 700 returns to 702, and the robotic device can rescan the environment to obtain a second representation of the environment. If the user accepts the marker(s) (708: YES), then method 700 proceeds to 708, where the robotic device can store information associated with the markers (e.g., location, features, etc.) in a memory (e.g., storage 330). For example, the robotic device can store the location of the marker(s) in an internal map of the environment (e.g., map 332).

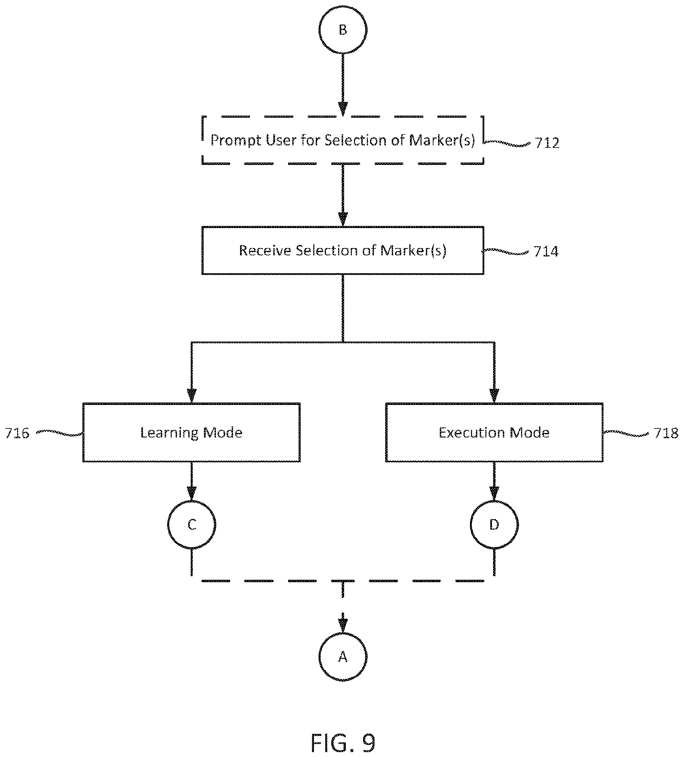

method 700 can proceed to 712, where the robotic device can prompt a user e.g., via a user interface or other type of I/O device, to select a set of markers from the marker(s) identified in the representation of the environment, as depicted in FIG. 9. The user can make a selection, and the robotic device can receive the selection from the user, at 714.

After the robotic device receives a selection of a set of markers from the user and/or has automatically selected a set of markers, method 700 can proceed to onto learning a skill, at 716, or executing a skill, at 718.

For any particular skill, the robotic device can be taught the skill prior to the robotic device executing or performing the skill. For example, to acquire a manipulation skill, the robotic device can be taught using LfD (e.g., kinesthetic teaching), whereby a user or other robotic device can demonstrate skills to the robotic device. For example, a manipulating element such as an arm of the robotic device can be moved through a sequence of waypoints to interact with an object. In the case of kinesthetic teaching, a user can physically demonstrate skills to the robotic device. The training or teaching can be performed in a mass-production setting, such as, for example, a manufacturing environment, in which the robotic device can be taught using an aggregate model representing a generic performance of a skill. Alternatively or additionally, the teaching can occur onsite after the robotic device has been deployed (e.g., at a hospital), such that the robotic device can learn to perform the skill in the specific site environment. In some embodiments, a robotic device can be taught in an onsite setting, and can then send information associated with the learned skill to one or more additional robotic devices, such that those additional robotic devices can also have the knowledge of the taught skill when operating in the same onsite setting. Such embodiments can be useful when multiple robotic devices are being deployed at a single site. Each robotic device can then receive and send information to other robotic devices such that they can collectively learn a set of skills for that onsite environment.

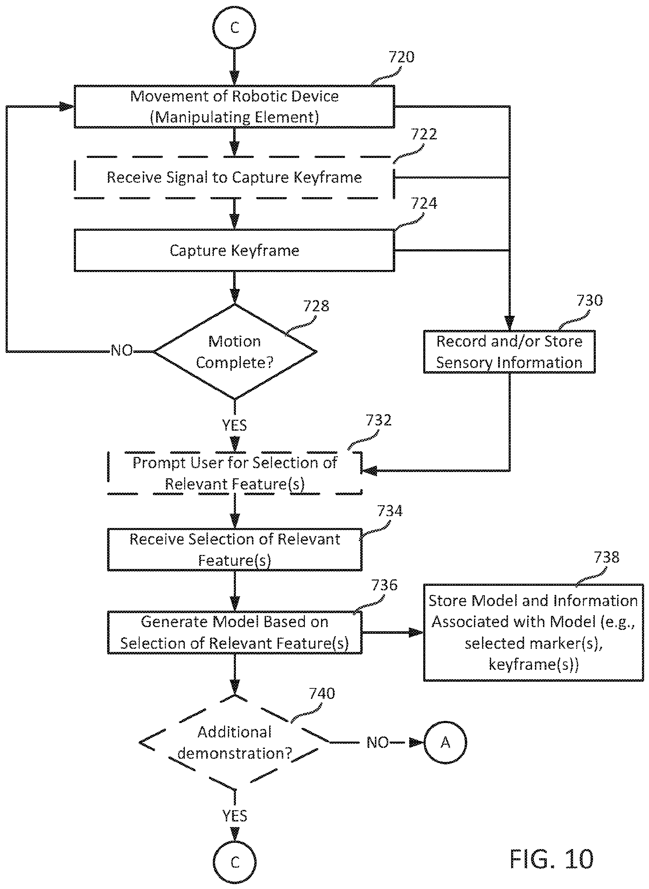

In the learning mode, depicted in FIG. 10, method 700 proceeds to 720-724, where a user can use a LfD teaching process to teach the robotic device a skill. In an embodiment, a skill can be defined as gripping an object located at a particular location, picking up the object, moving the object to a different location, and setting die object down in the different location. At 720, a user (or another robotic device) can guide the robotic device including a manipulating element (e.g., manipulating element 250, 350, or 450) through a movement. For example, a user can guide the manipulating element of the robotic device through a demonstration associated with executing a particular skill, e.g., an interaction with a human, an engagement with and/or manipulation of an object. While guiding the manipulating element of the robot through the movement, the user can indicate to the robot when to capture information about the state of the manipulating element (e.g., joint configurations, joint forces and/or torques, end effector configuration, end effector position) and/or the environment (e.g., a location of an object associated with a selected marker and/or other objects in the environment). For example, the robotic device can receive a signal from a user to capture information about the manipulating element and/or environment at a waypoint or keyframe during the movement of the manipulating element, at 722. In response to receiving a signal, at 724, the robotic device can capture the information about the manipulating element and/or environment at that keyframe. The manipulating element information can include, for example, joint configurations, joint torques, end effector positions, and/or end effector torques. The environmental information can include, for example, the position of a selected marker relative to the end effector, and can indicate to die robotic device when objects in the environment may have moved. If the movement is still ongoing (728: NO), then the robotic device can wait to capture information about the manipulating element and/or environment at additional keyframes. In some embodiments, the robotic device can be programmed to capture keyframe information without receiving a signal from a user. For example, while the manipulating element is being moved by a user, the robotic device can monitor changes in the segments and joints of the manipulating element, and when those changes are exceed a threshold, or when there is a directional change in a trajectory of a segment or joint, the robotic device can autonomously select that point to be keyframe and record information about the manipulating element and/or environment at that keyframe.

During the movement of the manipulating element, the robotic device can also continuously or periodically, without receiving a signal from a user, record sensory information, e.g., information about the manipulating element and/or environment, at 730. For example, the robotic device can record information about the trajectories of segments and joints, as well their configurations, as the user moves the manipulating element through the demonstration.

In some embodiments, the robotic device can include an audio device (e.g., 244) such as, for example, a microphone, and the demarcation of keyframes can be controlled by speech commands. For example, a user can indicate to the robotic device that it plans to give a demonstration by speaking, "I will guide you." The demonstration can begin when the user indicates the first keyframe by speaking "start here." Intermediate keyframes can be indicated by speaking "go here." And a final keyframe representing the end of the demonstration can be indicated by speaking "end here." Suitable examples of demonstration teaching are provided in the Akgun article.

Once the movement or demonstration is complete (728: YES), the robotic device can generate a model for die demonstrated skill based on a subset of all the sensory information (e.g., manipulating element information, environmental information) that has been recorded. For example, at 712, the robotic device can optionally prompt a user, e.g., via a user interface or other type of I/O device, for a selection of features that are relevant to learning the skill, and at 734, the robotic device can receive the selection of features from the user. Alternatively or additionally, the robotic device can know to select certain features to use in generating the model based on previous instructions from a user. For example, the robotic device can recognize that it is being demonstrated to pick up an object, e.g., based on the sensory information, and can automatically select one or more features of the sensory information (e.g., joint configuration, joint torques, end effector torques) to include as relevant features for generating the skill model, e.g., based on past demonstrations of picking up the same or different objects.

At 736, the robotic device can generate the model of the skill using the selected features. The model can be generated using stored machine learning libraries or algorithms (e.g., machine learning libraries 342). In some embodiments, the model can be represented as a HMM algorithm that includes a plurality of parameters, such as, for example, a number of hidden states, a feature space (e.g., features included in a feature vector), and emission distributions for each state modeled as a Gaussian distribution. In some embodiments, the model can be represented as a support vector machine or "SVM" model, which can include parameters such as, for example, a kernel type (e.g., linear, radial, polynomial, sigmoid), a cost parameter or function, weights (e.g., equal, class balanced), a loss type or function (e.g., hinge, square-hinge), and a solving or problem type (e.g., dual, primal). The model can be associated with the relevant sensory information and/or other sensory information recorded by the robotic device during the skill demonstration. The model can also be associated with marker information indicating the set of markers that were manipulated during the skill demonstration and/or features associated with one or more physical objects tied to those markers. The robotic device can store the model in a memory (e.g., storage 230 or 330), at 738.

Optionally, at 740, the robotic device can determine whether the user will be performing another demonstration of the skill. If another demonstration is to be performed (740: YES), then method :%00 can return to 720, where a user (or other robotic device) can guide the robotic device through an additional demonstration. If the demonstrations are complete (740: NO), then method 700 can optionally return to the beginning and perform a new scan of the environment. Alternatively, in some embodiments, method 700 can terminate.

In some embodiments, as described above, the robotic device can actively scan its surrounding environment to monitor changes in the environment. Accordingly, during learning and/or execution, the robotic device can engage in continuous scanning of the environment, and update the representation of the environment accordingly, as well as the environmental information that it has stored.

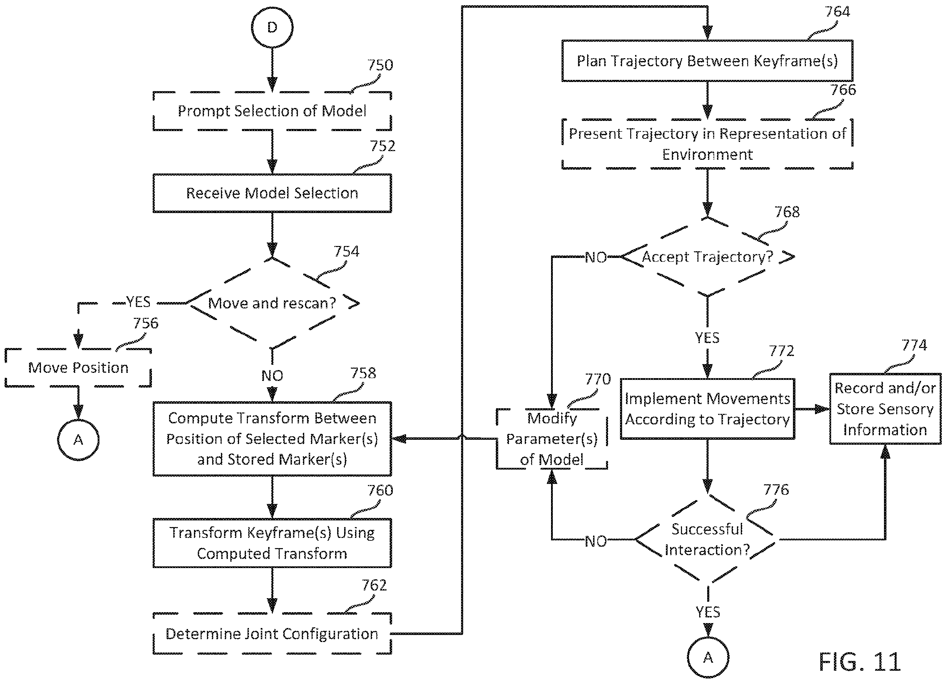

In the execution mode, depicted in FIG. 11, the robotic device can optionally prompt, e.g., via a user interface or other type of I/O device, a user to select a model, such as a model that was previously generated by the robotic device in the learning mode, at 750. The robotic device can receive the model selection, at 752. In some embodiments, the robotic device can receive the model selection from a user, or alternatively, the robotic device can automatically select a model based on certain rules and/or conditions. For example, the robotic device can be programmed to select a model when it is in a certain area of a building (e.g., when it is in a certain room or floor), during certain times or day, etc. Alternatively or additionally, the robotic device can know to select a certain model based on the selected set of markers. At 754, the robotic device can determine whether to move closer to a selected marker prior to generating a trajectory and executing a skill with respect to the selected marker. For example, the robotic device can determine based on the selected set of markers and the selected model whether it should move to be better positioned to execute the skill (e.g., to be closer or more proximate to the marker, to be facing the marker from a certain angle). The robotic device may make this determination based on the sensory information that was recorded during a demonstration of the skill. For example, the robotic device may recognize that it was positioned closer to the marker when it was demonstrated the skill and accordingly adjust its position.

If the robotic device determines to move with respect to the selected marker (754: YES), the robotic device can move its position (e.g., adjust its location and/or orientation), at 756, and method 700 can return to 702, where the robotic device scans the environment again to obtain a representation of the environment. Method 700 can proceed back through the various steps to 754. If the robotic device determines not to move with respect to the selected marker (754: NO), then the robotic device can generate an action trajectory, e.g., for a manipulating element of the robotic device.

Specifically, at 758, the robotic device can compute a function that transforms (e.g., translates) between a selected set of markers and a set of markers associated with the selected model (e.g., the marker(s) that were selected when the robotic device learned the skill, i.e., generated the selected model), referred to herein as a "stored marker" or "stored set of markers." For example, the robotic device can be taught a skill using a first set of markers that were at specific location(s) and/or orientation(s) relative to a portion of the robotic device, such as, for example, the end effector, and later, the robotic device can be executing the skill with a second set of markers that are at different location(s) and/or orientation(s) relative to the manipulating element. In such instances, the robotic device can compute a transformation function that transforms between the positon(s) and/or orientation(s) of first set of markers and the second set of markers.

At 760, the robotic device can use the computed transformation function to transform the position and orientation of a portion of the manipulating element, e.g., the end effector of the manipulating element, in each keyframe that was recorded when the skill was taught. Optionally, at 762, the robotic device can use inverse kinematic equations or algorithms to determine the configuration of the joints of the manipulating element for each keyframe, at 762. The position and orientation of the end effector and the set of markers can be provided in a task space (e.g., the Cartesian space where the robotic device is operating), while the orientation of the joints can be provided in a joint or configuration space (e.g., a *n*th dimensional space associated with the configuration of the manipulating element, where the robotic device is represented as a point and *n* is the number of degrees of freedom of the manipulating element). In some embodiments, the inverse kinematic calculations can be guided by the joint configuration information recorded when the robotic device was taught the skill (e.g., the configuration of the joints recorded during a teaching demonstration using the manipulating element). For example, the inverse kinematics calculations can be seeded (e.g., provided with an initial guess for the calculation, or biased) with the joint configurations that were recorded at each keyframe. Additional conditions can also be imposed on the inverse kinematics calculations, such as, for example, requiring that the calculated joint configurations do not deviate more than a predefined amount from a joint configuration in an adjacent keyframe. At 764, the robotic device can plan the trajectory between the joint configurations from one keyframe to the next keyframe, e.g., in the joint space, to generate a complete trajectory for the manipulating element to execute the skill.

In some embodiments, after the robotic device transforms the position and orientation of the portion of the manipulating element (e.g., the end effector), the robotic device can plan the trajectory for the manipulating element in the task space. In such embodiments, method 700 can proceed from 760 directly to 764.

At 766 and 768, the robotic device can optionally present the trajectory to a user and prompt the user, e.g., via a user interface or other I/O device, to accept or reject the trajectory. Alternatively, the robotic device can accept or reject the trajectory based on internal rules and/or conditions, and by analyzing relevant sensory information. If the trajectory is rejected (768: NO), then the robotic device can optionally modify one or more parameters of the selected model, at 770, and generate a second trajectory, at 758-764. The parameters of the model can be modified, for example, by selecting different features (e.g., different sensory information) to include in the model generation. In some embodiments, where the model is a HMM model, the robotic device can change the parameters of the model based on a determined success or failure, in which the robotic device tracks a log likelihood of different models having different parameters and selects the model with a higher log likelihood than the other models. In some embodiments, where the model is a SVM model, the robotic device can change the parameters by changing the feature space or configuration parameters (e.g., kernel type, cost parameter or function, weights), as described above.

If the trajectory is accepted (768: YES), then the robotic device can move the manipulating element to execute the generated trajectory, at 772. While the manipulating element is executing the planned trajectory, the robotic device, e.g., via one or more sensors on the manipulating element and other components of the robotic device, can record and/or store sensory information, such as, for example, information about the manipulating element and/or environment, at 774.

Optionally, at 774, the robotic device can determine whether the execution of the skill was successful (e.g., whether an interaction with an object meets predefined success criteria). For example, the robotic device can scan the environment and determine whether the current state of die environment and the robotic device, including, for example, the locations of one or more objects, and/or the position or orientation of those objects relative to the manipulating element or another component of robotic device, and determine whether that current state aligns with predefined success criteria. The predefined and/or learned success criteria can be provided by a user, or, in some embodiments, provided by a different robotic device and/or compute device. The predefined and/or learned success criteria can indicate information about different features of the environment and/or the robotic device that are associated with success. In some embodiments, a user may also provide an input indicating to the robotic device that the execution was successful.

In a particular example, where a skill is defined as gripping an object at a particular location and picking up the object, success for the skill can be taught and/or defined as detecting that one or more markers associated with the object are in a specific relationship with each other and/or the robotic device, or detecting that a sufficient force or torque is being experienced (or was experienced) by the end effector or a joint of the manipulating element (e.g., a wrist joint), signifying that the manipulating element is supporting the weight of the object and therefore has picked up the object. If the execution was not successful (776: NO), then the robotic device may optionally modify the parameters of the model, at 770, and/or generate a new trajectory, at 758-764. If the execution was successful (776: YES), then the data associated with the successful interaction (e.g., data indicating that the execution was successful and how it was successful) can be recorded, and method 700 can optionally return to the beginning and perform a new scan of the environment. Alternatively, in some embodiments, method 700 can terminate.

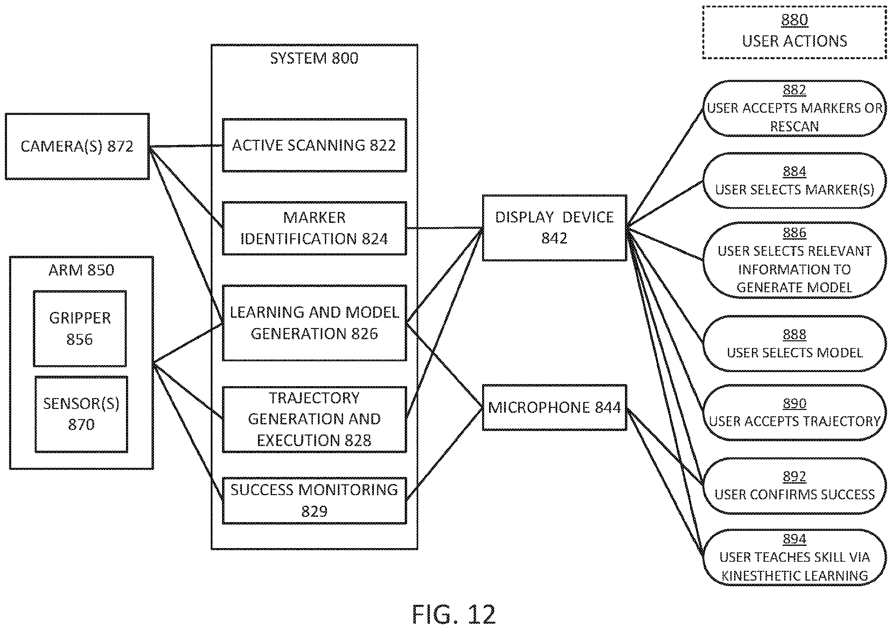

FIG. 12 is a block diagram showing a system architecture for robotic learning and execution, including actions performed by a user, according to some embodiments. A system 800 can be configured for robotic learning and execution. System 800 can include one or more robotic devices, such as any of the robotic devices described herein, and can execute modules, processes, and/or functions, depicted in FIG. 12 as active scanning 822, marker identification 824, learning and model generation 826, trajectory generation and execution 828, and success monitoring 829. Active scanning 822, marker identification 824, learning and model generation 826, trajectory generation and execution 828, and success monitoring 829 can correspond to one or more steps performed by a robotic device, as described in reference to method 700, depicted in FIGS. 8-11. For example, active scanning 822 include step 702 of method 700; marker identification 824 can include one or more of steps 704-710 of method 700; learning and model generation 826 can include one or more of steps 712-738; trajectory generation and execution 828 can include one or more of steps 712, 714, 718, and 750-774; and success monitoring 829 can include one or more of steps 774 and 776.

System 800 can be connected (e.g., in communication with) one or more devices, including, for example, camera(s) 872, an arm 850 (including a gripper 856 and sensor(s) 870), a display device 842, and a microphone 844. System 800, via display device 842, microphone 844, and/or other I/O device (not depicted) can receive inputs from a user associated with one or more user actions 880. User actions 880 can include, for example, 882, a user accepting markers or requesting a rescan of an environment, 884, a user selecting marker(s), 886, a user selecting relevant information to generate a model, 888, a user selecting a model for executing a skill, 890, a user accepting a trajectory for executing a skill, 892, a user confirming success of an executed skill, 894, a user teaching a skill via kinesthetic learning.

For active scanning 822, system 800 use camera(s) 872 to scan an environment and record sensory information about the environment, including information associated with one or more markers in the environment. For marker identification 824, system 800 can analyze the sensory information to identify one or more markers in the environment, and receive input(s) from a user, e.g., via display device 842, indicating 822, the user accepting the markers or requesting a rescan of the environment. For learning and model generation 826, system 800 can receive sensory information collected by camera(s) 872 and/or sensor(s) 870 on arm 850, and use that information to generate a model for a skill. As part of learning and model generation 826, system 800 can receive input(s) from a user, e.g., via display device 842 and/or microphone 844, indicating 884, that the user has selected a set of marker(s) for teaching the skill, 886, that a user has selected certain features of recorded sensory information to use in generating the model, and/or 894, that the user is demonstrating the skill. For trajectory generation and execution 828, system 800 can generate a planned trajectory and control movements of arm 850 to execute the trajectory. As part of trajectory generation and execution 828, system 800 can receive input(s) from a user, e.g., via display device 842, indicating 888, that the user has selected a model for generating a trajectory and/or 890, that the user has accepted or rejected the generated trajectory. For success monitoring 829, system 800 can determine whether the execution of a skill was successful by analyzing sensory information recorded by sensor(s) 870 during execution of the skill. As part of success monitoring 829, system 800 can receive input(s) from a user, e.g., via display device 842 and/or microphone 844, indicating 892, that the user has confirmed that the execution was successful.

While specific device(s) and/or connections between system 800 and those device(s) are depicted in FIG. 12, it is understood that additional device(s) (not depicted) can communicate with system 800 to receive from and/or send information to system 800, according to any of the embodiments described herein.

Some embodiments and/or methods described herein can be performed by a different software (executed on hardware), hardware, or a combination thereof. Hardware modules may include, for example, a general-purpose processor, a field programmable gate array (FPGA), and/or an application specific integrated circuit (ASIC). Software modules (executed on hardware) can be expressed in a variety of software languages (e.g., computer code), including C. C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

## Claims

1. A robotic device, comprising:
a memory;
a processor;
a manipulating element; and
a set of sensors,
the processor being operatively coupled to the memory, the manipulating element, and the set of sensors, wherein the processor is configured to :
obtain, via a first subset of sensors from the set of sensors, a representation of an environment;
identify a plurality of markers in the representation of the environment using visual markers or object recognition based on object information, each marker from the plurality of markers associated with a physical object from a plurality of physical objects located in the environment;
present, via a user interface and to a user, information indicating a position of each marker from the plurality of markers in the representation of the environment;
receive, via the user interface and from the user, a selection of a set of markers from the plurality of markers associated with a set of physical objects from the plurality of physical objects;
when the user moves the manipulating element through a demonstration of a skill including a physical interaction between the manipulating element and the set of physical objects, obtain, via a second subset of sensors from the set of sensors, sensory information at each keyframe from a plurality of keyframes during the demonstration, the sensory information including sensor data associated with a set of features of the manipulating element, each keyframe of the plurality of keyframes representing a specific point during the demonstration of the skill; present, via the user interface and to the user, the set of features such that the user can select a subset of features that is relevant to learning the skill from the set of features;
generate a model of the skill using sensor data associated with the subset of features selected by the user; and
associate the model with marker information indicative of the set of markers and the sensory information.

2. The robotic device of claim 1, wherein the manipulating element includes an end effector configured to engage with a subset of physical objects from the set of physical objects.

3. The robotic device of claim 1, wherein the second subset of sensors is different from the first subset of sensors.

4. The robotic device of claim 1, wherein:
the manipulating element includes a plurality of movable components joined via a plurality of joints,
the set of sensors includes at least one of:
a first sensor configured to measure a force acting on a joint from the plurality of joints; or
a second sensor configured to detect an engagement between a movable component from the plurality of movable components and a physical object from the set of physical objects, and
the processor is configured to generate the model for executing the skill using at least sensor data indicative of a force measured by the first sensor or an engagement detected by the second sensor.

5. The robotic device of claim 1, wherein:
the manipulating element includes (i) a plurality of joints, and (ii) an end effector configured to move a physical object from the set of physical objects,
the set of sensors includes a sensor configured to measure a force placed on at least one of the end effector or a joint from the plurality of joints coupled to the end effector when the end effector is moving the physical object, and
the processor is configured to generate the model for executing the skill using at least sensor data indicative of a force measured by the sensor.

6. The robotic device of claim 1, wherein the processor is configured to generate the model for executing the skill by:
selecting a Hidden Markov Model (HMM) or support vector machine (SVM) algorithm from a machine learning library stored in the memory; and
setting one or more parameters of the HMM or SVM algorithm using the sensor data associated with the subset of features selected by the user.

7. The robotic device of claim 1, wherein the representation of the environment is a first representation of the environment and the plurality of markers is a first plurality of markers,
the processor further configured to, after generating the model for executing the skill:
obtain, via the first subset of sensors, a second representation of the environment;
identify, via visual markers or object recognition based on object information, a second plurality of markers in the second representation of the environment, each marker from the second plurality of markers associated with a physical object from a plurality of physical objects located in the environment; and
generate, using the model and a set of markers from the second plurality of markers, a trajectory to execute the skill using the manipulating element.

8. The robotic device of claim 7, wherein the processor is further configured to:
present, via the user interface and to the user, the trajectory such that the user can accept or reject the trajectory; and
in response to receiving an input from the user indicating a rejection of the trajectory, modify one or more parameters of the model.

9. The robotic device of claim 7, wherein the processor is further configured to:
execute the skill using the manipulating element;
obtain, using the set of sensors, data during the execution of the skill;
receive, via the user interface and from the user, an input indicating whether the execution of the skill was successful;
in response the input indicating that the execution of the skill was successful, storing the data associated with the successful execution of the skill in the memory; and
in response to the input indicating that the execution of the skill was not successful, modifying one or more parameters of the model.

10. A non-transitory processor-readable medium storing code representing instructions to be executed by a processor of a robotic device, the code comprising code to cause the processor to:
obtain, via a set of sensors of a robotic device, a representation of an environment;
identify a plurality of markers in the representation of the environment using visual markers or object recognition based on object information, each marker from the plurality of markers associated with a physical object from a plurality of physical objects located in the environment;
present, via a user interface of the robotic device and to a user, information indicating a position of each marker from the plurality of markers in the representation of the environment such that the user can make a selection of a set of markers from the plurality of markers associated with a set of physical objects from the plurality of physical objects;
in response to receiving the selection of the set of markers, identify a model associated with executing a physical interaction between a manipulating element of the robotic device and the set of physical objects, the manipulating element including a plurality of joints and an end effector;
generate, using the model, a trajectory including movements of the plurality of joints and the end effector associated with executing the physical interaction;
present, via the user interface and to the user, the trajectory such that the user can accept or reject the trajectory;
in response receiving an input from the user indicating an acceptance of the trajectory, implement the movements of the plurality of joints and the end effector to execute the physical interaction; and
in response receiving an input from the user indicating a rejection of the trajectory, modify one or more parameters of the model to produce a modified model and generate a second trajectory using the modified model.

11. The non-transitory processor-readable medium of claim 10, further comprising code to cause the processor to, in response to receiving the input from the user indicating the acceptance of the trajectory:
obtain, via the set of sensors, sensory information associated with the execution of the physical interaction; and
determine whether the execution of the physical interaction meets a success criterion based on the sensory information.

12. The non-transitory processor-readable medium of claim 11, further comprising code to cause the processor to:
in response to determining that the execution of the physical interaction meets the success criterion, generate a signal indicating that the physical interaction was successful; and
in response to determining that the execution of the physical interaction does not meet the success criterion:
modify the model based on the sensory information to produce a modified model; and
generate, using the modified model, a second trajectory for the manipulating element.

13. The non-transitory processor-readable medium of claim 10, wherein the model is associated with (i) a stored set of markers, (ii) sensory information indicating at least one of a position or an orientation of the manipulating element at points along a stored trajectory of the manipulating element associated with the stored set of markers, and (iii) sensory information indicating a configuration of the plurality of joints at the points along the stored trajectory;
the code to cause the processor to generate the trajectory includes code to cause the processor to:
compute a transformation function between the set of markers and the stored set of markers;
transform, for each point, the at least one of the position or the orientation of the manipulating element using the transformation function;
determine, for each point, a planned configuration of the plurality of joints based on the configuration of the plurality of joints at the points along the stored trajectory; and
determine, for each point, a portion of the trajectory between that point and a consecutive point based on the planned configuration of the plurality of joints for that point.

14. The non-transitory processor-readable medium of claim 10, further comprising code to cause the processor to:
in response to receiving the selection of the set of markers, determine whether to move the robotic device with respect to the set of markers selected by the user; and
in response to determining to move the robotic device with respect to the set of markers, move the robotic device using a transport element of the robotic device to adjust a location or orientation of the manipulating element and obtain a second representation of the environment prior to generating the trajectory.

15. The robotic device of claim 1, wherein the processor is further configured to:
when the user moves the manipulating element through the demonstration of the skill, monitor changes to the manipulating element; and
in response to a directional change in the manipulating element, select a point associated with the directional change as a keyframe.

16. The robotic device of claim 1, further comprising transport elements to move around the environment, wherein the processor is configured to move the robotic device based on the model and/or the set of markers.

## Patentansprüche

1. Robotervorrichtung, umfassend:
einen Speicher;
einen Prozessor;
ein Betätigungselement; und
einen Satz von Sensoren,
wobei der Prozessor operativ mit dem Speicher, dem Betätigungselement und dem Satz von Sensoren gekoppelt ist, wobei der Prozessor konfiguriert ist, um:
über einen ersten Teilsatz von Sensoren des Satzes von Sensoren eine Darstellung einer Umgebung zu erhalten;
eine Vielzahl von Markierungen in der Darstellung der Umgebung unter Verwendung von visuellen Markierungen oder Objekterkennung basierend auf Objektinformationen zu identifizieren, wobei jede Markierung der Vielzahl von Markierungen einem physischen Objekt einer Vielzahl von physischen Objekten zugeordnet ist, die sich in der Umgebung befinden;
über eine Benutzeroberfläche und für einen Benutzer Informationen zu präsentieren, die eine Position jeder Markierung der Vielzahl von Markierungen in der Darstellung der Umgebung angeben;
über die Benutzeroberfläche und von dem Benutzer eine Auswahl eines Satzes von Markierungen der Vielzahl von Markierungen zu empfangen, die einem Satz von physischen Objekten der Vielzahl von physischen Objekten zugeordnet sind;
wenn der Benutzer das Betätigungselement durch eine Vorführung einer Fertigkeit bewegt, die eine physische Interaktion zwischen dem Betätigungselement und des Satzes von physischen Objekten einschließt, über einen zweiten Teilsatz von Sensoren des Satzes von Sensoren sensorische Informationen an jedem Keyframe einer Vielzahl von Keyframes während der Vorführung zu erhalten, wobei die sensorischen Informationen Sensordaten enthalten, die einem Satz von Merkmalen des Betätigungselements zugeordnet sind, wobei jeder Keyframe der Vielzahl von Keyframes einen bestimmten Punkt während der Vorführung der Fertigkeit darstellt;
über die Benutzeroberfläche und für den Benutzer den Satz von Merkmalen zu präsentieren, sodass der Benutzer aus dem Satz von Merkmalen einen Teilsatz von Merkmalen auswählen kann, die für das Erlernen der Fertigkeit relevant sind;
ein Modell der Fertigkeit unter Verwendung von Sensordaten zu erzeugen, die dem vom Benutzer ausgewählten Teilsatz von Merkmalen zugeordnet sind; und dem Modell die Markierungsinformationen zuzuordnen, die den Satz von Markierungen und die sensorischen Informationen angeben.

2. Robotervorrichtung nach Anspruch 1, wobei das Betätigungselement einen Endeffektor beinhaltet, der konfiguriert ist, um mit einem Teilsatz von physischen Objekten des Satzes von physischen Objekten in Eingriff zu treten.

3. Robotervorrichtung nach Anspruch 1, wobei sich der zweite Teilsatz von Sensoren von dem ersten Teilsatz von Sensoren unterscheidet.

4. Robotervorrichtung nach Anspruch 1, wobei:
das Betätigungselement eine Vielzahl von beweglichen Komponenten beinhaltet, die über eine Vielzahl von Gelenken verbunden sind,
der Satz von Sensoren mindestens einen der Folgenden beinhaltet:
einen ersten Sensor, der konfiguriert ist, um eine Kraft zu messen, die auf ein Gelenk einer Vielzahl von Gelenken einwirkt; oder
einen zweiten Sensor, der konfiguriert ist, um einen Eingriff zwischen einer beweglichen Komponente der Vielzahl von beweglichen Komponenten und einem physischen Objekt des Satzes von physischen Objekten zu erkennen, und
der Prozessor konfiguriert ist, um das Modell zum Ausführen der Fertigkeit unter Verwendung von mindestens den Sensordaten zu erzeugen, die eine durch den ersten Sensor gemessene Kraft oder einen durch den zweiten Sensor erkannten Eingriff angeben.

5. Robotervorrichtung nach Anspruch 1, wobei:
das Betätigungselement (i) eine Vielzahl von Gelenken und (ii) einen Endeffektor beinhaltet, der konfiguriert ist, um ein physisches Objekt des Satzes von physischen Objekten zu bewegen,
der Satz von Sensoren einen Sensor beinhaltet, der konfiguriert ist, um eine Kraft zu messen, die auf mindestens einen von dem Endeffektor oder einem Gelenk der Vielzahl von Gelenken ausgeübt wird, die mit dem Endeffektor gekoppelt sind, wenn der Endeffektor das physische Objekt bewegt, und
der Prozessor konfiguriert ist, um das Modell zum Ausführen der Fertigkeit unter Verwendung von mindestens den Sensordaten zu erzeugen, die eine Kraft angeben, die von dem Sensor gemessen wird.

6. Robotervorrichtung nach Anspruch 1, wobei der Prozessor konfiguriert ist, um das Modell zum Ausführen der Fertigkeit durch Folgendes zu erzeugen:
Auswählen eines Hidden Markov Modell (HMM)- oder Support Vector Machine (SVM)-Algorithmus aus einer im Speicher gespeicherten Machine-Learning-Bibliothek; und
Einstellen eines oder mehrerer Parameter des HMM- oder SVM-Algorithmus unter Verwendung der Sensordaten, die dem vom Benutzer ausgewählten Teilsatz von Merkmalen zugeordnet sind.

7. Robotervorrichtung nach Anspruch 1, wobei die Darstellung der Umgebung eine erste Darstellung der Umgebung ist und die Vielzahl von Markierungen eine erste Vielzahl von Markierungen ist, wobei der Prozessor ferner konfiguriert ist, um nach dem Erzeugen des Modells zum Ausführen der Fertigkeit:
über den ersten Teilsatz von Sensoren eine zweite Darstellung der Umgebung zu erhalten;
über visuelle Markierungen oder Objekterkennung basierend auf Objektinformationen eine zweite Vielzahl von Markierungen in der zweiten Darstellung der Umgebung zu identifizieren, wobei jede Markierung der zweiten Vielzahl von Markierungen einem physischen Objekt einer Vielzahl von physischen Objekten zugeordnet ist, die sich in der Umgebung befinden; und
unter Verwendung des Modells und eines Satzes von Markierungen der zweiten Vielzahl von Markierungen eine Bewegungsbahn zu erzeugen, um die Fertigkeit unter Verwendung des Betätigungselements auszuführen.

8. Robotervorrichtung nach Anspruch 7, wobei der Prozessor ferner konfiguriert ist, um:
über die Benutzeroberfläche und für den Benutzer die Bewegungsbahn zu präsentieren, sodass der Benutzer die Bewegungsbahn annehmen oder ablehnen kann; und
in Reaktion auf das Empfangen einer Eingabe von dem Benutzer, die eine Ablehnung der Bewegungsbahn angibt, einen oder mehrere Parameter des Modells zu modifizieren.

9. Robotervorrichtung nach Anspruch 7, wobei der Prozessor ferner konfiguriert ist, um:
die Fertigkeit unter Verwendung des Betätigungselements auszuführen;
unter Verwendung des Satzes von Sensoren Daten während der Ausführung der Fertigkeit zu erhalten;
über die Benutzeroberfläche und von dem Benutzer eine Eingabe zu empfangen, die angibt, ob die Ausführung der Fertigkeit erfolgreich war;
in Reaktion auf die Eingabe, die angibt, dass die Ausführung der Fertigkeit erfolgreich war, die Daten, die der erfolgreichen Ausführung der Fertigkeit zugeordnet sind, im Speicher zu speichern; und
in Reaktion auf die Eingabe, die angibt, dass die Ausführung der Fertigkeit nicht erfolgreich war, einen oder mehrerer Parameter des Modells zu modifizieren.

10. Nichtflüchtiges prozessorlesbares Medium, in dem Code gespeichert ist, der Anweisungen darstellt, die von einem Prozessor einer Robotervorrichtung ausgeführt werden sollen, wobei der Code Code umfasst, um den Prozessor zu veranlassen:
über einen Satz von Sensoren einer Robotervorrichtung eine Darstellung einer Umgebung zu erhalten;
eine Vielzahl von Markierungen in der Darstellung der Umgebung unter Verwendung von visuellen Markierungen oder Objekterkennung basierend auf Objektinformationen zu identifizieren, wobei jede Markierung der Vielzahl von Markierungen einem physischen Objekt einer Vielzahl von physischen Objekten zugeordnet ist, die sich in der Umgebung befinden;
über eine Benutzeroberfläche der Robotervorrichtung und für einen Benutzer Informationen zu präsentieren, die eine Position jeder Markierung der Vielzahl von Markierungen in der Darstellung der Umgebung angeben, sodass der Benutzer eine Auswahl aus einem Satz von Markierungen der Vielzahl von Markierungen treffen kann, die einem Satz von physischen Objekten der Vielzahl von physischen Objekten zugeordnet sind;
in Reaktion auf das Empfangen der Auswahl des Satzes von Markierungen ein Modell zu identifizieren, das der Ausführung einer physischen Interaktion zwischen einem Betätigungselement der Robotervorrichtung und des Satzes von physischen Objekten zugeordnet ist, wobei das Betätigungselement eine Vielzahl von Gelenken und einen Endeffektor beinhaltet;
unter Verwendung des Modells eine Bewegungsbahn zu erzeugen, die Bewegungen der Vielzahl von Gelenken und des Endeffektors beinhaltet, die der Ausführung der physischen Interaktion zugeordnet sind;
über die Benutzeroberfläche und für den Benutzer die Bewegungsbahn zu präsentieren, sodass der Benutzer die Bewegungsbahn annehmen oder ablehnen kann;
in Reaktion auf das Empfangen einer Eingabe von dem Benutzer, die eine Annahme der Bewegungsbahn angibt, die Bewegungen der Vielzahl von Gelenken und des Endeffektors zu implementieren, um die physische Interaktion auszuführen; und
in Reaktion auf das Empfangen einer Eingabe von dem Benutzer, die eine Ablehnung der Bewegungsbahn anzeigt, einen oder mehrere Parameter des Modells zu modifizieren, um ein modifiziertes Modell zu erzeugen, und eine zweite Bewegungsbahn unter Verwendung des modifizierten Modells zu erzeugen.

11. Nichtflüchtiges prozessorlesbares Medium nach Anspruch 10, ferner umfassend Code, um den Prozessor zu veranlassen, in Reaktion auf den Empfang der Eingabe von dem Benutzer, die die Annahme der Bewegungsbahn angibt:
über den Satz von Sensoren sensorische Informationen zu erhalten, die der Ausführung der physischen Interaktion zugeordnet sind; und
zu bestimmen, ob die Ausführung der physischen Interaktion ein Erfolgskriterium erfüllt, basierend auf den sensorischen Informationen.

12. Nichtflüchtiges prozessorlesbares Medium nach Anspruch 11, ferner umfassend Code, um den Prozessor zu veranlassen:
in Reaktion auf das Bestimmen, dass die Ausführung der physischen Interaktion das Erfolgskriterium erfüllt, ein Signal zu erzeugen, das angibt, dass die physische Interaktion erfolgreich war; und
in Reaktion auf das Bestimmen, dass die Ausführung der physischen Interaktion das Erfolgskriterium nicht erfüllt:
das Modell basierend auf den sensorischen Informationen zu modifizieren, um ein modifiziertes Modell zu erzeugen; und
unter Verwendung des modifizierten Modells eine zweite Bewegungsbahn für das Betätigungselement zu erzeugen.

13. Nichtflüchtiges prozessorlesbares Medium nach Anspruch 10, wobei das Modell (i) einem gespeicherten Satz von Markierungen, (ii) sensorischen Informationen, die mindestens eines von einer Position oder einer Ausrichtung des Betätigungselements an Punkten entlang einer gespeicherten Bewegungsbahn des Betätigungselements angeben, das dem gespeicherten Satz von Markierungen zugeordnet ist, und (iii) sensorischen Informationen, die eine Konfiguration der Vielzahl von Gelenken an den Punkten entlang der gespeicherten Bewegungsbahn angeben, zugeordnet ist;
wobei der Code, der den Prozessor veranlassen soll, die Bewegungsbahn zu erzeugen, Code enthält, der den Prozessor veranlasst:
eine Transformationsfunktion zwischen dem Satz von Markierungen und dem gespeicherten Satz von Markierungen zu berechnen;
für jeden Punkt die mindestens eine Position oder Ausrichtung des Betätigungselements unter Verwendung der Transformationsfunktion zu transformieren;
für jeden Punkt eine geplante Konfiguration der Vielzahl von Gelenken basierend auf der Konfiguration der Vielzahl von Gelenken an den Punkten entlang der gespeicherten Bewegungsbahn zu bestimmen; und
für jeden Punkt einen Abschnitt der Bewegungsbahn zwischen diesem Punkt und einem nachfolgenden Punkt basierend auf der geplanten Konfiguration der Vielzahl von Gelenken für diesen Punkt zu bestimmen.

14. Nichtflüchtiges prozessorlesbares Medium nach Anspruch 10, ferner umfassend Code, um den Prozessor zu veranlassen:
in Reaktion auf das Empfangen der Auswahl des Satzes von Markierungen zu bestimmen, ob die Robotervorrichtung in Bezug auf den vom Benutzer ausgewählten Satz von Markierungen bewegt werden soll; und
in Reaktion auf das Bestimmen die Robotervorrichtung in Bezug auf den Satz von Markierungen zu bewegen, die Robotervorrichtung unter Verwendung eines Transportelements der Robotervorrichtung zu bewegen, um eine Position oder Ausrichtung des Betätigungselements anzupassen und vor dem Erzeugen der Bewegungsbahn eine zweite Darstellung der Umgebung zu erhalten.

15. Robotervorrichtung nach Anspruch 1, wobei der Prozessor ferner konfiguriert ist, um:
wenn der Benutzer das Betätigungselement durch die Vorführung der Fertigkeit bewegt, die Änderungen an dem Betätigungselement zu überwachen; und
in Reaktion auf eine Richtungsänderung in dem Betätigungselement einen Punkt, der der Richtungsänderung zugeordnet ist, als Keyframe auszuwählen.

16. Robotervorrichtung nach Anspruch 1, ferner umfassend Transportelemente zum Bewegen in der Umgebung, wobei der Prozessor konfiguriert ist, um die Robotervorrichtung basierend auf dem Modell und/oder dem Satz von Markierungen zu bewegen.

## Revendications

1. Dispositif robotique, comprenant :
une mémoire ;
un processeur ;
un élément de manipulation ; et
un ensemble de capteurs,
le processeur étant fonctionnellement couplé à la mémoire, à l'élément de manipulation et à l'ensemble de capteurs, dans lequel le processeur est configuré pour :
obtenir, par l'intermédiaire d'un premier sous-ensemble de capteurs de l'ensemble de capteurs, une représentation d'un environnement ;
identifier une pluralité de marqueurs dans la représentation de l'environnement à l'aide de marqueurs visuels ou d'une reconnaissance d'objet basée sur des informations d'objet, chaque marqueur parmi la pluralité de marqueurs étant associé à un objet physique parmi une pluralité d'objets physiques situés dans l'environnement ;
présenter, par l'intermédiaire d'une interface utilisateur et à un utilisateur, des informations indiquant une position de chaque marqueur parmi la pluralité de marqueurs dans la représentation de l'environnement ;
recevoir, par l'intermédiaire de l'interface utilisateur et en provenance de l'utilisateur, une sélection d'un ensemble de marqueurs parmi la pluralité de marqueurs associés à un ensemble d'objets physiques parmi la pluralité d'objets physiques ;
lorsque l'utilisateur déplace l'élément de manipulation au cours d'une démonstration d'une compétence comprenant une interaction physique entre l'élément de manipulation et l'ensemble d'objets physiques, obtenir, par l'intermédiaire d'un second sous-ensemble de capteurs de l'ensemble de capteurs, des informations sensorielles pour chaque trame clé d'une pluralité de trames clés pendant la démonstration,
les informations sensorielles comprenant des données de capteurs associées à un ensemble de caractéristiques de l'élément de manipulation, chaque trame clé de la pluralité de trames clés représentant un point spécifique pendant la démonstration de la compétence ; présenter, par l'intermédiaire de l'interface utilisateur et à l'utilisateur, l'ensemble de caractéristiques de telle sorte que l'utilisateur puisse sélectionner un sous-ensemble de caractéristiques qui est pertinent pour l'apprentissage de la compétence dans l'ensemble de caractéristiques ;
générer un modèle de la compétence à l'aide de données de capteurs associées au sous-ensemble de caractéristiques sélectionnées par l'utilisateur ; et
associer le modèle à des données de capteurs représentatives de l'ensemble de marqueurs et des informations sensorielles.

2. Dispositif robotique selon la revendication 1, dans lequel l'élément de manipulation comprend un effecteur d'extrémité configuré pour s'engager sur un sous-ensemble d'objets physiques de l'ensemble d'objets physiques.

3. Dispositif robotique selon la revendication 1, dans lequel le second sous-ensemble de capteurs est différent du premier sous-ensemble de capteurs.

4. Dispositif robotique selon la revendication 1, dans lequel :
l'élément de manipulation comprend une pluralité de composants mobiles reliés par une pluralité d'articulations,
l'ensemble de capteurs comprend au moins l'un des éléments suivants :
un premier capteur configuré pour mesurer une force agissant sur une articulation parmi la pluralité d'articulations ; ou
un second capteur configuré pour détecter un engagement entre un composant mobile parmi la pluralité de composants mobiles et un objet physique de l'ensemble d'objets physiques, et
le processeur est configuré pour générer le modèle destiné à exécuter la compétence en utilisant au moins des données de capteurs représentatives d'une force mesurée par le premier capteur ou un engagement détecté par le second capteur.

5. Dispositif robotique selon la revendication 1, dans lequel :
l'élément de manipulation comprend (i) une pluralité d'articulations, et (ii) un effecteur d'extrémité configuré pour déplacer un objet physique de l'ensemble d'objets physiques,
l'ensemble de capteurs comprend un capteur configuré pour mesurer une force exercée sur au moins l'un de l'effecteur d'extrémité ou d'une articulation parmi la pluralité d'articulations couplées à l'effecteur d'extrémité lorsque l'effecteur d'extrémité déplace l'objet physique, et
le processeur est configuré pour générer le modèle destiné à exécuter la compétence en utilisant au moins des données de capteurs représentatives d'une force mesurée par le capteur.

6. Dispositif robotique selon la revendication 1, dans lequel le processeur est configuré pour générer le modèle destiné à exécuter la compétence par :
la sélection d'un modèle de Markov caché (HMM) ou d'un algorithme de machine à vecteurs de support (SVM) dans une bibliothèque d'apprentissage automatique stockée dans la mémoire ; et
la définition d'un ou plusieurs paramètres de l'algorithme HMM ou SVM à l'aide des données de capteurs associées au sous-ensemble de caractéristiques sélectionnées par l'utilisateur.

7. Dispositif robotique selon la revendication 1, dans lequel la représentation de l'environnement est une première représentation de l'environnement et la pluralité de marqueurs est une première pluralité de marqueurs, le processeur étant en outre configuré, après avoir généré le modèle destiné à exécuter la compétence, pour :
obtenir, par l'intermédiaire du premier sous-ensemble de capteurs, une seconde représentation de l'environnement ;
identifier, par l'intermédiaire de marqueurs visuels ou d'une reconnaissance d'objet basée sur des informations d'objet, une seconde pluralité de marqueurs dans la seconde représentation de l'environnement, chaque marqueur parmi la seconde pluralité de marqueurs étant associé à un objet physique parmi une pluralité d'objets physiques situés dans l'environnement ; et
générer, à l'aide du modèle et d'un ensemble de marqueurs parmi la seconde pluralité de marqueurs, une trajectoire pour exécuter la compétence à l'aide de l'élément de manipulation.

8. Dispositif robotique selon la revendication 7, dans lequel le processeur est en outre configuré pour :
présenter, par l'intermédiaire de l'interface utilisateur et à l'utilisateur, la trajectoire de sorte que l'utilisateur puisse accepter ou rejeter la trajectoire ; et
en réponse à la réception d'une entrée en provenance de l'utilisateur indiquant un rejet de la trajectoire, modifier un ou plusieurs paramètres du modèle.

9. Dispositif robotique selon la revendication 7, dans lequel le processeur est en outre configuré pour :
exécuter la compétence à l'aide de l'élément de manipulation ;
obtenir, à l'aide de l'ensemble de capteurs, des données pendant l'exécution de la compétence ;
recevoir, par l'intermédiaire de l'interface utilisateur et en provenance de l'utilisateur, une entrée indiquant si l'exécution de la compétence a réussi ;
en réponse au fait que l'entrée indique que l'exécution de la compétence a réussi, stocker les données associées à l'exécution réussie de la compétence dans la mémoire ; et
en réponse au fait que l'entrée indique que l'exécution de la compétence n'a pas réussi, modifier un ou plusieurs paramètres du modèle.

10. Support non transitoire lisible par processeur stockant un code représentant des instructions devant être exécutées par un processeur d'un dispositif robotique, le code comprenant un code destiné à amener le processeur à :
obtenir, par l'intermédiaire d'un ensemble de capteurs d'un dispositif robotique, une représentation d'un environnement ;
identifier une pluralité de marqueurs dans la représentation de l'environnement à l'aide de marqueurs visuels ou d'une reconnaissance d'objet basée sur des informations d'objet, chaque marqueur parmi la pluralité de marqueurs étant associé à un objet physique parmi une pluralité d'objets physiques situés dans l'environnement ;
présenter, par l'intermédiaire d'une interface utilisateur du dispositif robotique et à un utilisateur, des informations indiquant une position de chaque marqueur parmi la pluralité de marqueurs dans la représentation de l'environnement de sorte que l'utilisateur puisse faire une sélection d'un ensemble de marqueurs parmi la pluralité de marqueurs associés à un ensemble d'objets physiques parmi la pluralité d'objets physiques ;
en réponse à la réception de la sélection de l'ensemble de marqueurs, identifier un modèle associé à l'exécution d'une interaction physique entre un élément de manipulation du dispositif robotique et l'ensemble d'objets physiques, l'élément de manipulation comprenant une pluralité d'articulations et un effecteur d'extrémité ;
générer, à l'aide du modèle, une trajectoire comprenant des mouvements de la pluralité d'articulations et de l'effecteur d'extrémité associé à l'exécution de l'interaction physique ;
présenter, par l'intermédiaire de l'interface utilisateur et à l'utilisateur, la trajectoire de sorte que l'utilisateur puisse accepter ou rejeter la trajectoire ;
en réponse à la réception d'une entrée en provenance de l'utilisateur indiquant une acceptation de la trajectoire, mettre en œuvre les mouvements de la pluralité d'articulations et de l'effecteur d'extrémité pour exécuter l'interaction physique ; et
en réponse à la réception d'une entrée en provenance de l'utilisateur indiquant un rejet de la trajectoire, modifier un ou plusieurs paramètres du modèle pour produire un modèle modifié et générer une seconde trajectoire à l'aide du modèle modifié.

11. Support non transitoire lisible par processeur selon la revendication 10, comprenant en outre un code destiné à amener le processeur, en réponse à la réception de l'entrée en provenance de l'utilisateur indiquant l'acceptation de la trajectoire, à :
obtenir, par l'intermédiaire de l'ensemble de capteurs, des informations sensorielles associées à l'exécution de l'interaction physique ; et
déterminer si l'exécution de l'interaction physique répond à un critère de réussite sur la base des informations sensorielles.

12. Support non transitoire lisible par processeur selon la revendication 11, comprenant en outre un code destiné à amener le processeur à :
en réponse à la détermination du fait que l'exécution de l'interaction physique répond au critère de réussite, générer un signal indiquant que l'interaction physique a réussi ; et
en réponse à la détermination du fait que l'exécution de l'interaction physique ne répond pas au critère de réussite :
modifier le modèle sur la base des informations sensorielles pour produire un modèle modifié ; et
générer, à l'aide du modèle modifié, une seconde trajectoire pour l'élément de manipulation.

13. Support non transitoire lisible par processeur selon la revendication 10, dans lequel le modèle est associé à (i) un ensemble stocké de marqueurs, (ii) des informations sensorielles indiquant au moins l'une d'une position ou d'une orientation de l'élément de manipulation en des points situés le long d'une trajectoire stockée de l'élément de manipulation associé à l'ensemble stocké de marqueurs, et (iii) des informations sensorielles indiquant une configuration de la pluralité d'articulations aux points situés le long de la trajectoire stockée ;
le code destiné à amener le processeur à générer la trajectoire comprend un code destiné à amener le processeur à :
calculer une fonction de transformation entre l'ensemble de marqueurs et l'ensemble stocké de marqueurs ;
transformer, pour chaque point, ladite au moins une de la position ou de l'orientation de l'élément de manipulation à l'aide de la fonction de transformation ;
déterminer, pour chaque point, une configuration planifiée de la pluralité d'articulations sur la base de la configuration de la pluralité d'articulations aux points situés le long de la trajectoire stockée ; et
déterminer, pour chaque point, une partie de la trajectoire entre ce point et un point consécutif sur la base de la configuration planifiée de la pluralité d'articulations pour ce point.

14. Support non transitoire lisible par processeur selon la revendication 10, comprenant en outre un code destiné à amener le processeur à :
en réponse à la réception de la sélection de l'ensemble de marqueurs, déterminer s'il faut déplacer le dispositif robotique par rapport à l'ensemble de marqueurs sélectionnés par l'utilisateur ; et
en réponse à la détermination du fait qu'il faut déplacer le dispositif robotique par rapport à l'ensemble de marqueurs, déplacer le dispositif robotique à l'aide d'un élément de transport du dispositif robotique pour ajuster un emplacement ou une orientation de l'élément de manipulation et obtenir une seconde représentation de l'environnement avant de générer la trajectoire.

15. Dispositif robotique selon la revendication 1, dans lequel le processeur est en outre configuré pour :
lorsque l'utilisateur déplace l'élément de manipulation pendant la démonstration de la compétence, surveiller des changements affectant l'élément de manipulation ; et
en réponse à un changement de direction de l'élément de manipulation, sélectionner un point associé au changement de direction en tant que trame clé.

16. Dispositif robotique selon la revendication 1, comprenant en outre des éléments de transport destinés à se déplacer dans l'environnement, dans lequel le processeur est configuré pour déplacer le dispositif robotique sur la base du modèle et/ou de l'ensemble de marqueurs.
